Europäisches Patentamt

European Patent Office

Office européen des brevets

(11) Publication number: **0 172 499 B1**

# EUROPEAN PATENT SPECIFICATION

(45) Date of publication of patent specification: **23.09.92**　(51) Int. Cl.⁵: **G06F 15/31**, G01R 27/28, G01R 23/16

(21) Application number: **85109978.8**

(22) Date of filing: **08.08.85**

(54) **Apparatus for determining poles and zeroes of the transfer function of a device.**

(30) Priority: **23.08.84 US 644405**
**23.08.84 US 644404**
**23.08.84 US 644307**

(43) Date of publication of application:
**26.02.86 Bulletin 86/09**

(45) Publication of the grant of the patent:
**23.09.92 Bulletin 92/39**

(84) Designated Contracting States:
**BE DE FR GB**

(56) References cited:
**US-A- 3 988 667**
**US-A- 4 047 002**

(73) Proprietor: **Hewlett-Packard Company**
**Mail Stop 20 B-O, 3000 Hanover Street**
**Palo Alto, California 94304(US)**

(72) Inventor: **Potter, Ronald W.**
**15684 Apollo Heights Court**
**Saratoga California 95070(US)**
Inventor: **Adcock, James L.**
**5707 63rd Ave. NE**
**Marysville Washington 98270(US)**

(74) Representative: **Schoppe, Fritz, Dipl.-Ing.**
**Seitnerstrasse 42**
**W-8023 Pullach bei München(DE)**

## Description

The present invention relates to an apparatus for determining poles and zeroes of the transfer function of a device in accordance with the preamble to claim 1. Various apparatus have been constructed in the prior art which measure the transfer function of a linear device (U.S. Patents 3,973,112 and 4,047,002). An apparatus in accordance with the preamble to claim 1 is known from the "Fourier Analyzer Training Manual", Hewlett-Packard Application Note 140-0, available from Hewlett-Packard Company, Palo Alto, California.

The transfer function of a linear device describes the behavior of the device in the Laplace transform (s-plane) domain in response to an applied stimulus. In the design of electrical, mechanical or electromechanical devices it is often important to know the location and strength of each pole and zero of the device transfer function in the s-plane so that the device may be optimized for a desired application. In particular, where device stability is important, knowledge of pole locations is critical. In order for the pole and zero measurement to be of use to the device designer, it is important that the measurement be performed quickly and accurately and that errors due to noise and distortion be minimized.

By means of the characterizing features of claim 1, the present invention devises an apparatus in accordance with the claim preamble wherein improved accuracy is obtained relative to the state of the art, which leads to a lower risk of erroneously determinating a location of a pole of the transfer function in the wrong half-plane of the s-domain. This is advantageous in the analysis of servo systems and other systems where instability is to be avoided.

In accordance with the illustrated embodiment of the present invention, a pole and zero analyzer is disclosed which performs the pole and zero measurement quickly and accurately and which corrects for noise-induced errors in the measurement. The pole and zero measurement is initiated by the application of a desired stimulus signal, such as random or Gaussian noise, to the device. The stimulus and response signals are sampled in the time domain and are transformed to the frequency domain via a Fast Fourier Transform so that the auto-power spectrum of the stimulus signal and the cross-power spectrum of the stimulus and response signals may be measured. In order to minimize pole-zero measurement error caused by noise and nonlinearities in the device response, an ensemble of stimulus and response signal measurements may be made and the auto-power and cross-power spectra may be measured as ensemble averages. The measured transfer function of the device is determined from the cross-power and auto-power spectra and the noise level on the measured data is estimated from the ensemble averages of the stimulus and response signals. Measurement time delays may be removed as required.

The measured transfer function is fitted to an estimated transfer function comprising a rational fraction of numerator and denominator Chebyshev polynomials in the variable, s. A weighting function is determined which may be used to emphasize certain portions of the transfer function for the purpose of increasing the accuracy of the pole and zero measurements. The coefficients of the numerator and denominator polynomials are then found as the weighted least squares fit of the measured transfer function data to the estimated transfer function. The quality of the fit of the estimated transfer function to the measured transfer function is determined. If the fit is insufficient, the orders of the numerator and denominator polynomials are varied, new coefficients are determined and the fit is again tested. When a sufficient fit is achieved, the Chebyshev numerator and denominator polynomials of the estimated transfer function are converted to ordinary polynomials and a root solver is utilized to find the roots of the two polynomials which yield the poles and zeroes of the estimated transfer function. The poles and zeroes may be displayed as desired by the device designer.

An embodiment of the invention will now be described in detail with reference to the accompanying drawings.

Figure 1    shows a noise corrected pole and zero analyzer in accordance with the present invention.

Figure 2    is a block diagram of the analyzer depicted in Figure 1.

Figure 3    is a flow chart of the operations performed by the analyzer depicted in Figure 1 during an analysis of the poles and zeroes of the transfer function of a device being tested.

Figure 4    is a detailed flow chart of one of the steps performed in the flow chart of Figure 3.

Figure 5    shows an idealized model of the device to be tested and measurement noise.

Figure 6    shows a detailed flow chart of the steps performed during the formulation of the weighting function used in the flow chart of Figure 3.

Figure 7    shows the steps performed during the formulation of an alternative weighting function which may be used.

Figure 8    shows a detailed flow chart of one of the steps performed in the flow chart of Figure

| | 3. |
|---|---|
| Figure 9 | shows various matrix definitions used in the analyzer shown in Figure 1. |
| Figure 10 | shows a partitioned matrix used in the analyzer shown in Figure 1. |
| Figure 11 | shows a detailed flow chart of one of the steps performed in the flow chart of Figure 3. |
| Figures 12A-B | show the various steps of the automatic order selection step shown in the flow chart of Figure 3. |
| Figures 13A-B | show the various steps on an alternative automatic order selection which may be used in the flow chart of Figure 3. |

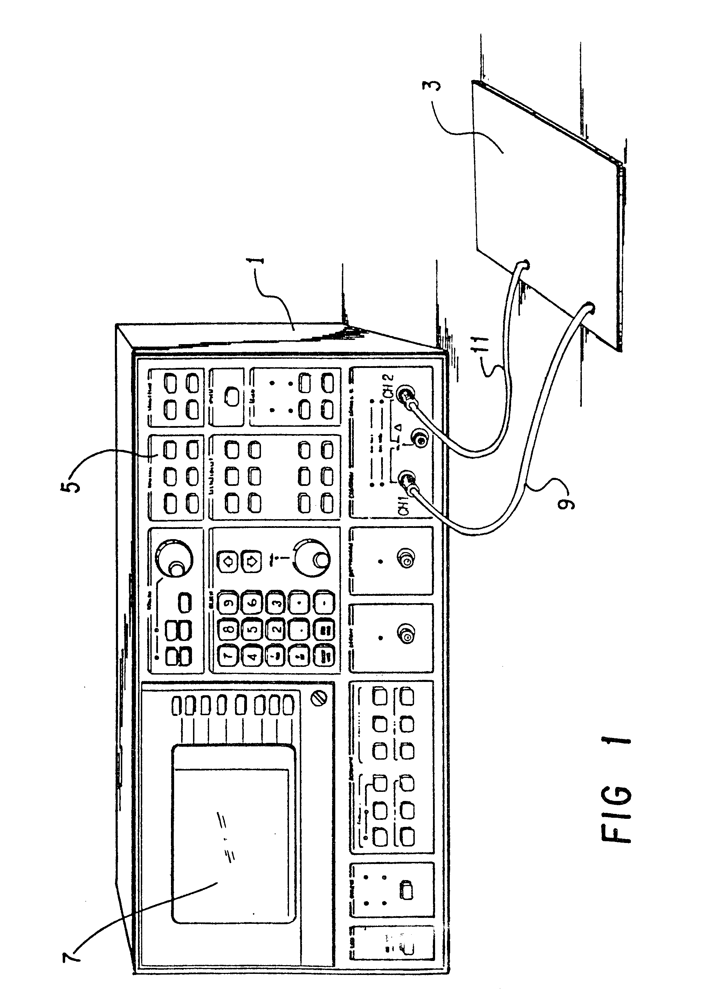

Figure 1 shows an analyzer 1 which is constructed in accordance with the present invention. A stimulus signal x(t) is applied through a cable 9 to a device 3 and the response y(t) of device 3 is received by analyzer 1 through a cable 11. Device 3 may be any electrical, mechanical or electromechanical apparatus, e.g., a servomotor. If external transducers are used, it is possible to apply mechanical vibrations to device 3 and to monitor the response of device 3 thereto for modal analysis. Various instructions may be input to analyzer 1 by the user through a keyboard 5 and the results of the measurement may be displayed on a display 7 such as a CRT.

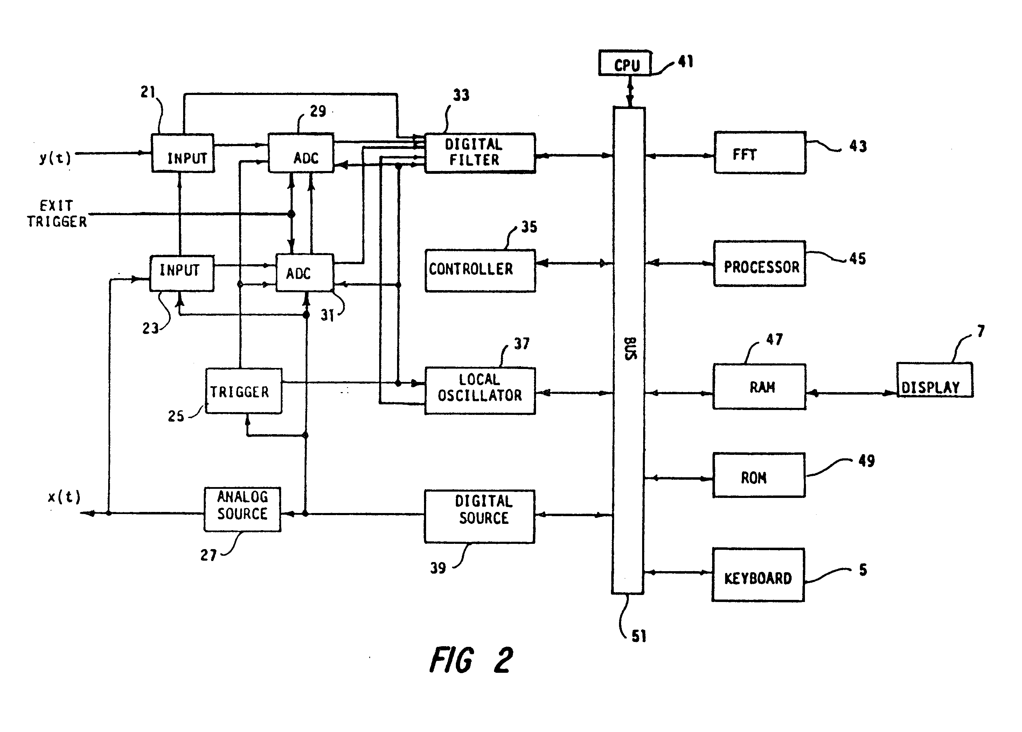

Figure 2 is a block diagram of analyzer 1. An analog source 27, driven by a digital source 39 under user control through keyboard 5, generates a stimulus signal x(t) which is applied through cable 9 to device 3. Both the stimulus signal x(t) and the response signal y(t) are received through input channels 21, 23 and are digitized by analog to digital converters 29, 31 at a sample rate set by local oscillator 37. A digital filter 33 may be used to reduce aliasing errors on sampled $x(t_j)$ and $y(t_j)$. Fast Fourier Transformer (FFT) 43 is used to transform the stimulus and response signals to the frequency domain signals $X(f_j)$ and $Y(f_j)$ which may then be stored in RAM 47. Floating point processor 45 is used to determine the cross-power and auto-power spectra of $X(f_j)$ and $Y(f_j)$ and to measure the amount of noise on $Y(f_j)$ if ensemble averages are taken. Processor 45, under control of CPU 41, is then used to measure the poles and zeroes of the transfer function of device 3 as is discussed hereinbelow. A bus 51, which may comprise, e.g., a dual bus system, is used for data and command transport.

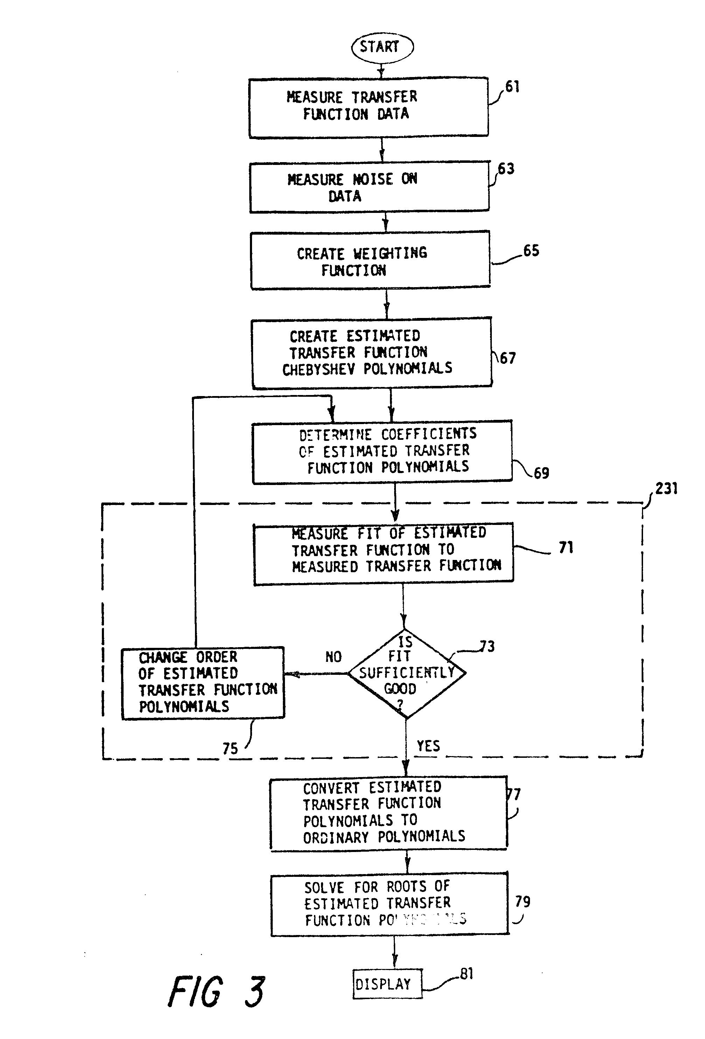

Figure 3 is a flow chart of the operations performed by analyzer 1 during the measurement of the poles and zeroes of the transfer function of device 3. In initial step 61, stimulus signal x(t) is applied to device 3 and response signal y(t) is recorded. The two signals are digitized and transformed to the frequency domain as $X(f_j)$ and $Y(f_j)$. The stimulus and response measurements may be repeated a number of times so that the auto-power and cross-power spectra may be measured as ensemble averages to decrease the effects of noise and nonlinearities in the response of device 3. The auto-power and cross-power spectra are measured and, in step 63, the measurement variance is determined for an estimate of measurement noise on the measured transfer function.

In step 67, a recurrence relationship is utilized to generate the numerator and denominator Chebyshev polynomials, P(s) and Q(s), of the estimated transfer function, $H_E(s)$. In step 65, a weighting function is determined for use in weighting the least squares analysis by which the estimated transfer function is fitted to the measured transfer function. In step 69, the coefficients of the two Chebyshev polynomials are determined as the weighted least squares fit of the estimated transfer function to the measured transfer function. In step 231, the actual fit is determined and analyzed for conformance to a set of fit criteria. If the fit is insufficient, the orders of the polynomials are varied and new coefficients are determined. If the fit is sufficient, the Chebyshev polynomials are converted to ordinary polynomials in step 77 and the roots of the ordinary polynomials are found in step 79. The poles and zeroes of the estimated transfer function (the roots of the polynomials) are displayed in step 81 as desired.

The various steps of the flow chart shown in Figure 3 will be discussed hereinbelow individually and in detail.

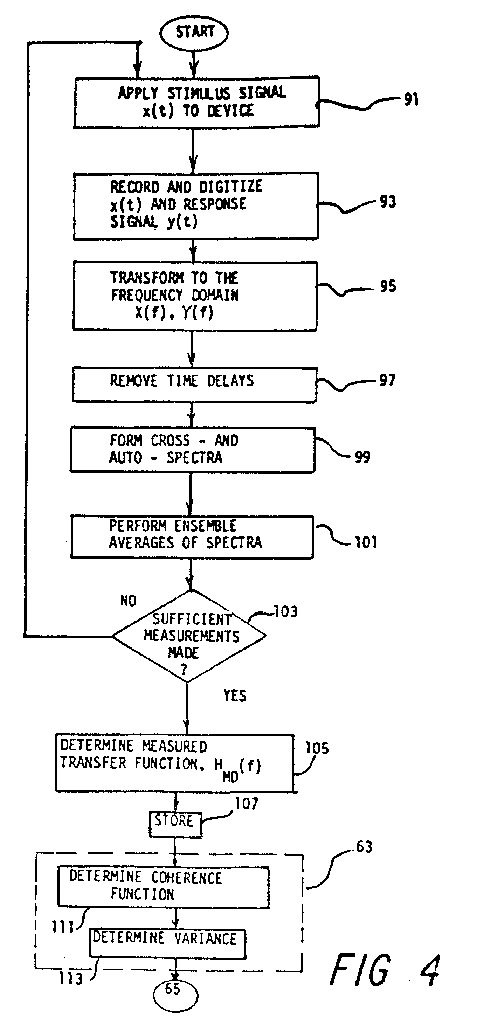

In step 61, the actual transfer function of device 3 is measured. Figure 4 shows, in sequence, the individual steps of step 61. A stimulus signal x(t) is applied to device 3 and both $x(t_j)$ and response signal $y(t_j)$ are sampled at a rate $f_s$. Any of a number of signals x(t) may be used to stimulate device 3. In particular, random noise may be desirable so that the effects of minor non-linearities in the response of device 3 may later be removed. In many applications, such as servomotor design, the frequency range of interest may be low, such as DC to 100 KHz. In this baseband case, $f_s$ could be as low as 200 KHz using the Nyquist relationship and ideal components. In reality, filter 33 is non-ideal and some aliasing does occur. This may be compensated for by increasing $f_s$ to, e.g., 256 KHz and/or by disregarding an upper portion of the data in the frequency domain.

In step 95, the time domain signals $x(t_j)$ and $y(t_j)$ are transformed by a Fast Fourier Transform to $X(f_j)$ and $Y(f_j)$ in the frequency domain. If 2048 samples are taken of each signal in the time domain, 1024 complex data points in the frequency domain are produced for each signal. It may be necessary to disregard the upper 200 or so frequency domain data points to compensate for aliasing effects. Because each of the frequency data points is complex, it is composed of a real part and an imaginary part which may also be expressed as a magnitude and a phase in polar form. The equations, and notation therein, are hereinafter recited in terms of complex variables unless otherwise indicated.

It is possible that time delays may exist in the measured data because of the physical constraints under which the measurements are made or because of non-ideal transducers or other devices used. These time delays should be removed from the data so that undesired virtual poles and zeroes are not injected into the analysis. Removal may be accomplished by any of a number of methods such as by multiplication of the frequency domain data by $e^{i2\pi ft}$ where i is the square root of -1 and t is the estimated time delay. Details of this method may be found at page 104 of the second edition of "The Fourier Transform And Its Applications" by Ronald Bracewell.

The measured transfer function, $H_{MD}(f_j)$ of device 3 may be defined in terms of Figure 5 which shows that the output of device 3 is dependent upon the input, the transfer function and an additive noise term. Therefore, the transfer function $H_{MD}(f_j)$ may be defined implicitly by the equation:

$$Y(f_j) = H_{MD}(f_j)X(f_j) + N_F(f_j) \qquad (1)$$

which may be rewritten, with the overbar defined as ensemble average, as:

$$\overline{YX^*} = H_{MD}\,\overline{XX^*} + \overline{N_F X^*}, \qquad (2)$$

or, as:

$$H_{MD} = \frac{\overline{YX^*} - \overline{N_F X^*}}{\overline{XX^*}}. \qquad (3)$$

The transfer function of device 3 is defined, in terms of the auto-power and cross-power spectra as:

$$H_{MD} = \frac{G_{YX}}{G_{XX}}, \qquad (4)$$

wherein the $\overline{N_F X^*}$ term is assumed to be negligibly small and the auto-power and cross-power spectra are defined as:

$$G_{XX} = \overline{XX^*}, \; G_{YY} = \overline{YY^*}, \; G_{YX} = \overline{YX^*}. \qquad (5)$$

In order to minimize the effect of the noise term on the measurement of the transfer function, the auto-power and cross-power spectra may be determined as ensemble averages over a number of stimulus response measurements. As the number of measurements in the ensemble is increased, the noise term averages to zero because of the random phase angles of the uncorrelated noise term. If random noise is used for the stimulus signal, then this averaging has the additional effect of linearizing non-linearities in the response of device 3 because of the lack of correlation between the stimulus signal and any non-linear response signals. It has been found that an ensemble of between 10 and 1000 measurements has yielded good results, and the number of measurements in the ensemble may be selected by the user. Using the ensembles, the transfer function of device 3 may be measured as the quotient:

$$H_{MD} = \frac{G_{YX}}{G_{XX}}. \qquad (6)$$

In step 107 of Figure 4, $H_{MD}(f_j)$, defined in equation 6, is stored in memory. In step 63, the ensemble coherence of the measured transfer function is measured for later use in correcting the pole and zero measurement for noise errors. In general, variance on a random variable x is defined as:

$$\sigma^2 = \overline{x^2} - \overline{x}^2 \qquad (7)$$

Although the variance may be estimated by resort to any of a number of well known methods, the variance may be determined rigorously in accordance with equations 4.92 and 4.93 at page 131 of the March, 1957, New York University Ph.D. dissertation by N.R. Goodman entitled "On The Joint Estimation Of The Spectra, Cospectrum And Quadrature Spectrum Of A Two-Dimensional Stationary Gaussian Process". The equations may be rewritten as Bessel functions of the second kind and may be integrated to yield:

$$\sigma^2_{RE} = \sigma^2_{IM} = \frac{1}{2} \cdot \frac{|H_{MD}|^2}{n-1} \cdot \frac{1-|\gamma|^2}{|\gamma|^2} \quad , \qquad (8)$$

wherein n is greater than one and n is the number of measurements in the ensemble. The coherence function used in equation 8 is defined as:

$$|\gamma|^2 = \frac{|G_{YX}|^2}{G_{XX} \cdot G_{YY}} \, . \qquad (9)$$

## WEIGHTING FUNCTION

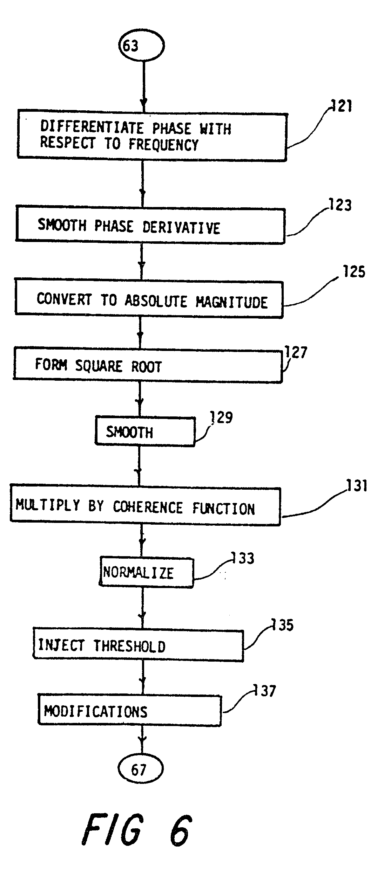

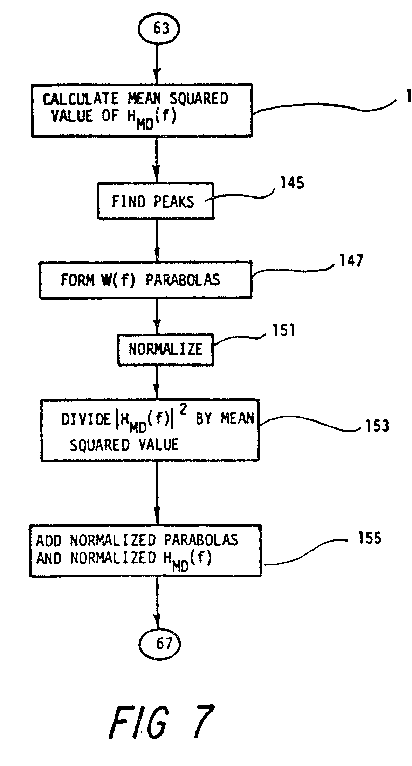

The user has the option of entering a user-defined weighting function, through controls 5. The user-defined weighting function allows the user to emphasize certain desired regions along the frequency axis in light of areas of known high or low measurement accuracy or of particular importance to the user. In that case, the user-defined weighting curve is displayed on display 7 and step 65 need not be performed. Otherwise, in step 65 of Figure 3, a weighting function W(f) for use in the least squares fit analysis is generated. Figures 6 and 7 each show various steps, of step 65, which may be performed to create one of two weighting functions. The weighting function generated by the steps shown in Figure 6 emphasizes regions along the frequency axis in which $H_{MD}(f)$ is rapidly changing. Thus, the weighted fit is equally good in regions around both poles and zeroes and the weighting function may be be best suited for use in servo analysis situations. The least squares fit is a minimization of the sum of the squared error between the measured transfer function $H_{MD}(f_j)$ and the estimated transfer function $H_E(s)$ evaluated at each frequency data point. The weighted error evaluated at each point, wherein j is the sampling index, may be defined as:

$$E(f_j) = W(f_j) (H_E(i2\pi f_j) - H_{MD}(f_j)) \qquad (10)$$

Although $H_{MD}$ is measured in terms of real frequency points and $H_E$ is in terms of complex s, $H_{MD}$ may be generalized to s and $H_{MD}$ and $H_E$ may be compared and contrasted directly. Persons of ordinary skill in the art will be able to perform the generalization by resort to the procedure of analytic continuation by which analytic functions of s and $i2\pi f$ may be viewed as equivalent.

The total weighted error $\epsilon'$, as defined in the least squares fit analysis is:

$$\epsilon' = \sum_{f_j} \left| E(f_j) \right|^2 \qquad (11)$$

wherein the error and weighting functions are evaluated at each frequency point and the summation is taken over the frequency range of interest. The weighting function, W(f), is used to emphasize desired regions of f in the least squares fit analysis. $H_E(s)$ is a rational fraction of two polynomials,

$$H_E(s) = \frac{P(s)}{Q(s)}. \qquad\qquad (12)$$

If it is assumed that the coefficients of $P(s)$ are $c_0, c_1, ..., c_m$, and that the coefficients of $Q(s)$ are $d_0, d_1, ..., d_n$, then the least squares fit analysis is performed by taking the partial derivative of $\epsilon'$ with respect to $c_0$, $c_1, ..., c_m$, and with respect to $d_0, d_1, ..., d_n$, and setting the partial derivatives equal to zero to generate homogeneous equations. This least squares fit analysis permits discovery of the desired minimum weighted error, $\epsilon'$, by simultaneously solving the homogeneous equations. A general discussion of the least squares fit analysis may be found, e.g., at chapter 6 of the second edition of "A First Course In Numerical Analysis" by Ralston and Rabinowitz.

Steps 121-137 of Figure 6 show in detail the creation of the weighting function, $W(f)$, outlined at step 67 of Figure 3. In essence, $W(f)$ is the phase derivative of $H_{MD}(f)$ evaluated at each point along the frequency axis. For three adjacent frequency data points ($x_1$, $x_2$, $x_3$), the phase derivative at point $x_2$ is defined to be $ph(x_3) - ph(x_1)$, wherein $ph(x)$ is the phase at data point x. The use of the phase derivative allows maximum weighting at regions of the frequency axis where the probability of a pole or zero of $H_{MD}(f)$ occuring is the highest and causes noise spikes to be only minimally weighted.

In steps 105-107 of Figure 4, the real and imaginary components of the complex frequency domain measured data points of $H_{MD}(f)$ were measured and stored. In step 121, the phase derivative at each measured data point is determined. In complex logarithm notation, the phase derivative may be expressed as:

$$ph(x_3)-ph(x_1)=Im(log(x_3)-log(x_1)) \qquad\qquad (13)$$

$$=Im(log(x_3/x_1)) \qquad\qquad (14)$$

$$=ph(x_3/x_1) \qquad\qquad (15)$$

$$=ph\left(\frac{(x_3)\,(x_1{}^*)}{(x_1)\,(x_1{}^*)}\right) = ph\left(\frac{(x_3)\,(x_1{}^*)}{|x_1|^2}\right). \qquad (16)$$

But, only the phase information is desired, so:

$$ph(x_3)-ph(x_1) = ph\,((x_3)(x_1{}^*)) = \frac{d\alpha 2}{df} \qquad\qquad (17)$$

Thus, it is necessary to evaluate the phase of $x_3 x_1{}^*$. Use of the small angle approximation is convenient and allows computation time to be minimized. The approximation that $ph(x_3 x_1{}^*)$ is equal to $\tan^{-1}(ph(x_3 x_1{}^*))$ may be used in the region of $-2 < \tan^{-1}(ph(x_3 x_1{}^*)) < 2$ wherein $\tan^{-1}(ph(x_3 x_1{}^*))$ is measured in radians. Outside of the region, $\tan^{-1}(ph(x_3 x_1{}^*))$ is approximated as $+2$ or $-2$. An added benefit of the small angle approximation is that noise on $H_{MD}(f)$ is further minimized because of the limitation on the rate of change of the phase.

Since the phase derivatives obtained at step 121 tend to be noisy, the phase derivative is smoothed at step 123. Smoothing may easily be performed by averaging the individual phase derivative data points with the seven phase derivative data points on either side of the particular data point of interest. Thus, each point on $W(f)$ is really an average of fifteen contiguous phase derivative data points with the result that noise spikes are reduced. While seven points on either side have been used, it has been found that the number may be varied from five to fifteen as desired with good effect. For servo analyses, thirteen points on either side have been used because of the high noise and light damping characteristics of the data. For modal analyses, seven points on either side have been sufficient because of the low noise and highly damped data.

Because only a positive weighting function is desired, the absolute magnitude is taken in step 125. The square root may be taken at step 127. In servo analyses, a smoother weighting function is usually desired so that all data may be used and the square root is often taken. Conversely, in modal analyses, the square root is usually not taken because of the typically higher Q-factor of the devices being analyzed.

In step 129, another smoothing may be made of the weighting function. Smoothing is performed in the same manner as in step 123.

It is also desirable to correct the weighting function to minimize the effect of regions having high noise on the measured data. The coherence function, measured in step 111 of Figure 4 and defined in equation 9, provides an estimate of the noise on each measured frequency domain data point of $H_{MD}(f_j)$. Multiplication by a noise correction factor,

$$\sqrt{\frac{|\gamma|^2}{1.05-|\gamma|^2}} \qquad (18)$$

de-emphasizes regions of high noise where the coherence function approaches zero. Use of the .05 factor allows clean data points to be emphasized by a factor of 20 greater than noisy data points. The resulting quantity, including the absolute magnitude of the phase derivative, at each point along the frequency axis, is:

$$\sqrt{\left|\frac{d\alpha}{df}\right| \cdot \frac{|\gamma|^2}{1.05-|\gamma|^2}} \qquad (19)$$

In step 133, the noise corrected weighting function is normalized to 1 to avoid numerical overflow and in step 135 a threshhold of .02 is injected so that no data is totally disregarded. The weighting function is, thus, defined as:

$$W(f) = \frac{\left(\sqrt{\left|\frac{d\alpha}{df}\right| \cdot \frac{|\gamma|^2}{1.05-|\gamma|^2}}\right)}{\left(\sqrt{\left|\frac{d\alpha}{df}\right| \cdot \frac{|\gamma|^2}{1.05-|\gamma|^2}}\right)_{MAX}, \text{ or } .02, \text{ whichever is greater.}} \qquad (20)$$

Finally, in step 137, the user had the option of modifying W(f). W(f), varying from 0 to +1, is displayed upon display 7 of analyzer 1 as a function of frequency. If no modification is made by the user, analyzer 1 starts at the highest and lowest frequency points and scans toward the center of the frequency range until a W(f) of at least 0.04 is found at both ends. Data above and below these two end points are ignored. In order to decrease measurement time or in order to avoid elimination of certain desired data, the user can specify the end points by means of two cursors on display 7 and controlled by controls 5.

Figure 7 shows the various steps, of step 63, which may be used in lieu of the steps shown in Figure 6 to generate an alternative weighting function. This alternative weighting function may be preferable in modal analysis because of the noise and distortion which often occurs near zeroes in many modal analysis situations. Modal analyses often involve sharper peaks than those involved in most servo analyses. The alternative weighting function tends to locate peaks very accurately and both pole and zero information may be derived therefrom.

In step 141, the squared value of the measured transfer function data $H_{MD}(f)$, normalized to its mean squared value, is computed and stored. In step 145, peaks in $H_{MD}(f)$ are determined. This determination is performed by fitting short line segments to successive portions of $H_{MD}(f)$. For 800 data points, four segment lengths typically may be used (8, 16, 32, 64). Segments may preferably be made to overlap by a factor of 2:1 to ensure that no peaks in the data are ignored.

The amplitude of each data point is then subtracted from the amplitude of the associated line segment. The remainder is compared to a threshhold value to determined whether or not a valid peak has been detected. A typical threshhold of $\sqrt{6}\sigma$ allows comparison of the remainder to the standard deviation at that point and allows elimination of false noise peaks. If the remainders at a predetermined number of successive points exceed the threshhold, then a final determination that a true peak has been detected may be made. It has been found that four successive points yields an accurate peak detection.

In step 147, a weighting function parabola is constructed around the center of each peak determined in step 145. The parabola center is located at $(S + T)/2$ wherein S and T are each three points beyond the outermost data points at which the threshhold was exceeded for the peak. The maximum height of the parabola is $(3L)/(2(T-S))$ above the baseline wherein L is the total number of frequency data points. Thus, the parabolas are constructed with width inversely proportional to height so that neither overly wide nor overly narrow peaks are ignored.

In step 151, the weighting function is normalized by dividing through by the maximum peak value. In step 153, the squared magnitude of the original measured data of $H_{MD}(f)$ is normalized by dividing by the mean squared value measured in step 141. It may be desirable to place added relative emphasis on regions of lesser variance. In this case, multiplication by the k-th power of the quotient of the squared transfer function magnitude divided by the sum of the squared transfer function magnitude and the transfer function variance estimate may be made. This function may be used in W(f) to ensure that very broad peaks are not inadvertently ignored. Finally, the two functions are added together in step 155 to form the final weighting function, W(f).

BASIS POLYNOMIAL GENERATION

In step 67 of Figure 3, the numerator and denominator basis polynomials of the estimated transfer function, $H_E(s)$, are generated in the Laplace variable, s. In general, it is possible to generate the two basis polynomials in any form but it has been found that the utilization of Chebyshev basis polynomials of P(s) and Q(s) has distinct advantages. Numeric ill-conditioning is a pervasive problem in any least squares fit analysis and large numeric errors are probable when finite precision processors are used because of the necessary addition of very large and very small numbers. Chebyshev polynomials have the property of varying in magnitude between plus and minus one in the range of minus one to plus one so that all added terms are of the same relative magnitude and numeric ill-conditioning is thereby avoided. Another advantage inherent in the use of Chebyshev polynomials is that higher order coefficients tend to be decoupled. Decoupling may also be obtained using various orthogonal polynomials which are data dependent and which therefore disadvantageously require polynomial recomputuation for each measurement. See, e.g., the polynomials discussed at section 6.4 of the second edition of "A First Course In Numerical Analysis" by Ralston and Rabinowitz. Further, because of the similarity between Chebyshev polynomials and sine and cosine functions, there exists a Chebyshev product-sum relationship by which the Chebyshev polynomial may be formulated so that timeconsuming multiplications of Chebyshev polynomials may be replaced by much simpler summations. The product-sum relation ship is described, e.g., at page 782 (equation 22.7.24) of the "Handbook Of Mathematical Functions" issued by the National Bureau Of Standards in June, 1964. There exists a typographical error in the NBS equation which should be rewritten as:

$$2T_m(x)\, T_n(x) \;=\; T_{n-m}\,(x) + T_{n+m}\,(x) \qquad (21)$$

The desired P(s) and Q(s) Chebyshev polynomials may easily be generated in accordance with the recurrence relationships given at page 782 of the above-referenced NBS handbook. The P(s) and Q(s) polynomials are polynomials in the complex variable s and may have real, imaginary or complex coefficients. Persons of ordinary skill in the art may easily formulate the complex Chebyshev polynomials using the recurrence relationships which are given for the purely real Chebyshev polynomials. If the measured time data of $H_{MD}(f_j)$ are purely real as in the baseband case, Hermitian symmetry may be used to facilitate the use of the complex Chebyshev polynomials. If modal analysis is performed, it is useful to discard the constraint of Hermitian symmetry and to modify the basis polynomials. In order to generate the P(s) and Q(s) basis polynomials, it is necessary to have an initial estimate of the orders of the two polynomials. This estimate is equivalent to estimating the number of poles and zeroes of the transfer function. An initial order estimate of 1 for each polynomial allows fitting of polynomials having one or more poles. A higher initial estimate may be made if more information about the device being analyzed is initially available.

COEFFICIENT DETERMINATIONS

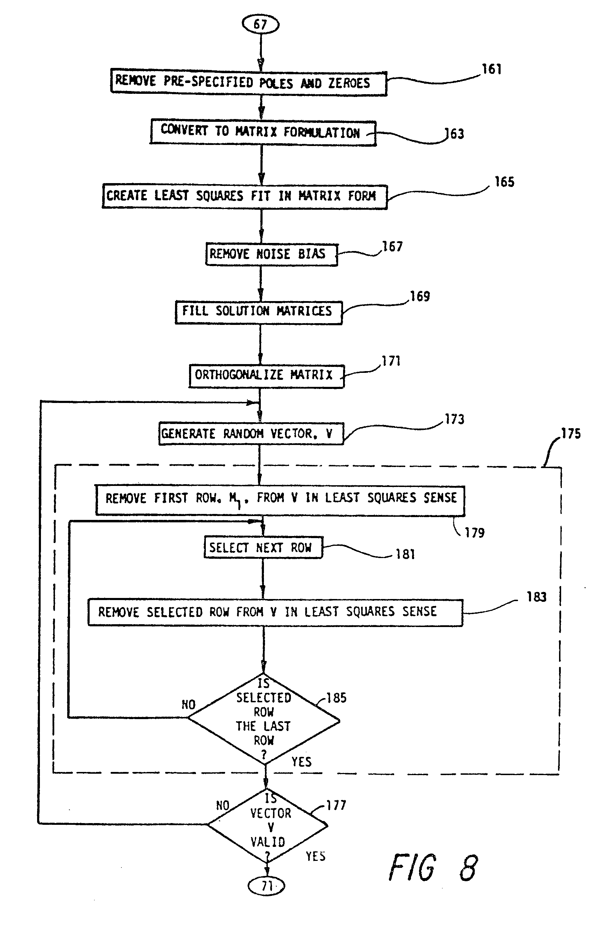

In step 69 of Figure 3, the coefficients of P(s) and Q(s) are determined. Figure 8 shows the various steps of step 69 in greater detail. The point by point error term defined in equation 11 may be rewritten as:

$$E_j = W_j \left[ \frac{P_j}{Q_j} - H_{MD_j} \right] \tag{22}$$

wherein the f notation has been dropped for the sake of convenience and the j subscripts indicate that sampled data along the frequency axis are being used. Multiplication through by the denominator polynomial Q(s) yields:

$$E_j Q_j = W_j \left[ P_j - H_{MD_j} Q_j \right] \tag{23}$$

Using equation 6, and defining new terms $A_j$ and $B_j$ as:

$$A_j = G_{YX_j} \quad \text{and} \quad B_j = G_{XX_j} \tag{24}$$

for simplicity, equation 23 may be rewritten as:

$$E_j Q_j = W_j \left[ P_j - \frac{A_j Q_j}{B_j} \right] \tag{25}$$

Multiplication through by $B_j$ is optional and would yield:

$$E_j Q_j B_j = W_j [B_j P_j - A_j Q_j] \tag{26}$$

Finally, if the optional multiplication is not performed, $\tilde{E}_j$ may be defined as:

$$\tilde{E}_j = E_j Q_j \tag{27}$$

In step 161 of Figure 8, the user-prespecified poles and zeroes may be removed from the estimated transfer function. Although this is not necessary, prespecification by the user of known poles and zeroes allows the analysis of unknown poles and zeroes to be performed with additional accuracy. Known zeroes are removed from the P(s) polynomial and known poles are removed from the Q(s) polynomial by reference to:

$$U_j = \prod_{k=1}^{U} (s_j - z_k) \tag{28}$$

$$V_j = \prod_{k=1}^{V} (s_j - p_k) \tag{29}$$

$$P(s) = \overset{\sim}{P}(s) \prod_{k=1}^{U} (s - z_k) \tag{30}$$

$$Q(s) = \overset{\sim}{Q}(s) \prod_{k=1}^{V} (s - p_k) \tag{31}$$

wherein $z_k$ are the prespecified zeroes and $p_k$ are the prespecified poles. Equation 27 may now be rewritten in terms of the removed prespecified poles and zeroes as:

$$\overset{\sim}{E}_j = W_j \left[ U_j \overset{\sim}{P}_j - \frac{A_j V_j \overset{\sim}{Q}_j}{B_j} \right] \tag{32}$$

The $W_j$, $U_j$, $A_j/B_j$ and $V_j$ terms may be correctly viewed as point by point weighting terms (including measured data) which are applied to the estimated polynomials of $\overset{\sim}{P}_j$ and $\overset{\sim}{Q}_j$. Simplification may be had by defining new terms $W_{pj}$ and $W_{qj}$ as:

$$W_{pj} = W_j U_j \quad \text{und} \quad W_{qj} = \frac{W_j A_j V_j}{B_j} \tag{33}$$

Thus, equation 32 may be simplied and rewritten as:

$$\overset{\sim}{E}_j = W_{pj} \overset{\sim}{P}_j - W_{qj} \overset{\sim}{Q}_j \tag{34}$$

In step 163 of Figure 8, the measured data, weighting functions and estimated transfer function polynomials are converted to matrix notation for ease of analysis utilizing the analyzer 1 shown in Figures 1 and 2. This conversion may easily be performed by persons of ordinary skill in the art. Two sets of orthogonal polynomials, $\phi_k$ and $\theta_k$ having coefficients $c_k$ and $d_k$ are generated using the recurrence relationship discussed hereinabove and are used to represent $P_j$ and $Q_j$:

EP 0 172 499 B1

$$\tilde{P}_j = \sum_{k=0}^{m-v} c_k \; \phi_{jk} \qquad (35)$$

$$\tilde{Q}_j = \sum_{k=0}^{n-v} d_k \; \Theta_{jk} \qquad (36)$$

Because the Chebyshev polynomials are data independent (and therefore do not have to be redetermined for each measurement), it is preferable to construct $\phi_k$ and $\theta_k$ as Chebyshev polynomials. The two polynomials may be of different orders m and n, but for the sake of convenience herein the assumption will be made that m = n and both polynomials will be written as $\theta_k$ hereinafter. Persons of ordinary skill in the art will be able to generalize to the case in which m and n are not equal. Equation 35 may be rewritten as:

$$\tilde{P}_j = \sum_{k=0}^{m-u} c_k \; \Theta_{jk} \qquad (37)$$

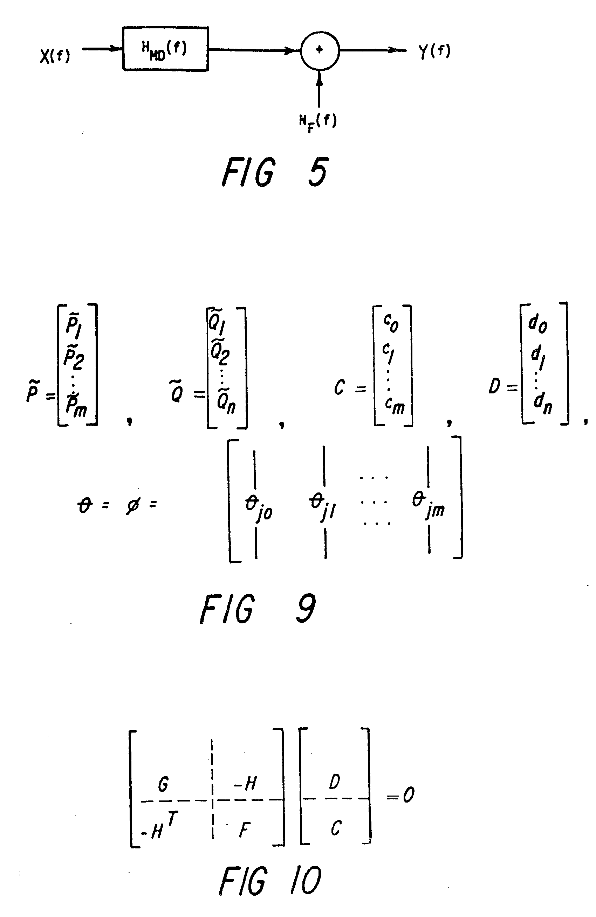

Matrix and vector notation is as shown in Figure 9. By inspection of the $\theta$ matrix, the first column comprises $T_0(f)$ wherein $T_k(f)$ is the notation for the k-th order Chebyshev polynomial in f. Thus, $T_0(f) = 1$, $T_1(f) = f$, $T_2(f) = 2f^2-1$, etc., as discussed hereinabove with respect to the Chebyshev recurrence relationship. Each row of the $\theta$ matrix corresponds to a particular data measurement frequency corresponding to the frequencies at which the Fast Fourier Transformed $H_{MD}(f_j)$ data is sampled. Loss of precision is avoided by the use of Chebyshev polynomials instead of ordinary polynomials as is discussed hereinabove. Using the matrix and vector notation definitions, equations 37 and 36 may be rewritten as:

$$\tilde{P} = \Theta C \qquad (38)$$

$$\tilde{Q} = \Theta D \qquad (39)$$

And, the error equation 34 may be rewritten as:

$$\tilde{E} = W_p \, \Theta C - W_q \, \Theta D \qquad (40)$$

Now, the sum of the squared errors may be written in matrix notation as:

$$\epsilon = \left| E_j(i2\pi f_j) \right|^2 = \Sigma f_j \left| P(i2\pi f_j) - Q(i2\pi f_j) H_{MD}(f_j) \right|^2 \cdot \left| W(f_j) \right|^2$$

$$= \tilde{E}^T \tilde{E} = (C^T \Theta^T W_p^T - D^T \Theta^T W_q^T) \cdot (W_p \Theta C - W_q \Theta D) \qquad (41)$$

wherein the T superscript denotes the complex conjugate transpose.

In step 165 of Figure 8, the least squares fit analysis discussed hereinabove is constructed in matrix form. The goal is to minimize with respect to the elements of the C and D vectors. This minimization is

11

accomplished by differentiating $\epsilon$ with respect to each element of C and D, by then setting the results equal to zero and solving for the satisfying C and D vectors. The resultant equations are given as:

$$0 = \Theta^T W_p{}^T (W_p \Theta C - W_q \Theta D) = \Theta^T W_p{}^T \tilde{E} \qquad (42)$$

$$0 = \Theta^T W_q{}^T (W_p \Theta C - W_q \Theta D) = \Theta^T W_q{}^T \tilde{E} \qquad (43)$$

For the sake of clarity, equations 42 and 43 may be rewritten as:

$$0 = \Theta^T W_p{}^T W_p \Theta C - \Theta^T W_p{}^T W_q \Theta D \qquad (44)$$

$$0 = \Theta^T W_q{}^T W_p \Theta C - \Theta^T W_q{}^T W_q \Theta D \qquad (45)$$

In step 167 of Figure 8, the noise bias is removed from the least squares fit analysis. From equation 33, the $W_{qj}$ terms contain $A_j$ which are defined in equation 24 as the $G_{YX}$ data at each frequency of measurement. As hereinabove discussed with reference to Figure 5, $G_{YX}$ contains the additive noise term $N_F(f_j)$. In equation 45, the squared magnitude of $W_q$ is taken as $W^T{}_q W_q$ with the result that the noise on $G_{YX}$ is squared. This squaring process effectively creates a noise bias on each frequency point of measured data because squaring has the effect of yielding a unidirectional bias. None of the apparatus available in the prior art have recognized the existence of noise bias on the pole-zero analysis and no apparatus in the prior art has attempted to remove the noise bias in any way. The effect of failure to remove the effects of noise bias in the least squares fit analysis has been to introduce bias and uncertainty in the determination of the locations of the transfer function poles and zeroes. This is of critical importance where device stability is important because the effect of the noise bias could be to erroneously locate a dominant pole in the wrong half-plane of the s-domain.

The coherence function and the variance are defined hereinabove in equations 8 and 9 and are obtained from the three spectra measurements made by the analyzer 1. Since the variance is the noise power in terms of squared magnitude, it may easily be subtracted from the $W^T{}_q W_q$ term shown in equation 46. Thus, noise bias correction is accomplished by subtracting out the variance at each measured frequency point:

$$0 = \Theta^T W_q{}^T W_p \Theta C - \Theta^T (W_q{}^T W_q - \sigma^2) \Theta D \qquad (46)$$

In step 169 of Figure 8, solution matrices are constructed and filled to determine the Chebyshev polynomial coefficients for the minimization of the least squares fit analysis. Equations 42 and 43 may be rewritten as equations 44 and 45 wherein noise bias is presumed to have been removed as described above if desired. New functions F, H, $H^T$ and G may be defined as:

$$F = \Theta^T W_p^T W_p^T \Theta \qquad (47)$$

$$H^T = \Theta^T W_p^T W_q \Theta \qquad (48)$$

$$H = \Theta^T W_q^T W_p \Theta \qquad (49)$$

$$G = \Theta^T W_q^T W_q \Theta \qquad (50)$$

such that the relations,

$$GD - HC = 0 \qquad (51)$$

$$- H^T D + FC = 0 \qquad (52)$$

are true and define the homogeneous system of equations shown as the matrix multiplication of the four part matrix, M, and the two part vector, V, in Figure 10.

In the case where an analysis of the maximum possible number of poles and zeroes is being made ($m = n = 40$), each of the D and C vectors is 40 elements long and the M matrix contains 6400 elements. Storage of this large number of elements is inefficient and the Chebyshev product-sum relationship described hereinabove may be utilized to minimize the size of the required memory and the amount of time required to regenerate the solution matrix, M. When this data compression is accomplished, the number of elements required to regenerate matrix M is reduced from 6400 to 320. Further, it may be recognized that the third quadrant of the M matrix is merely the transpose of the second quadrant so that only one or the other need ever be fully regenerated for solution of the matrix. The other may then be reconstructed easily from it. And, in addition, only two of the four matrix quadrants need be regenerated at any one time during the solution of the matrix. The Chebyshev product-sum relationship states that:

$$2T_j T_k = T_{|j-k|} + T_{|j+k|} \qquad (53)$$

Thus, the more specific relationship of:

$$2\sum_f (W \cdot T_j \cdot T_k) = \sum_f (W \cdot T_{|j-k|}) + \sum_f (W \cdot T_{|j+k|}) \qquad (54)$$

may be used in the data compression discussed above. The result is that each element of the M matrix is a summation of two other summations in the matrix.

From Figure 10, it can be seen that the column vector, V, must be orthogonal to each row of the matrix, M. Thus, $M_1 V = 0$, $M_2 V = 0$, ..., $M_n V = 0$, wherein $M_k$ denotes the k-th row of matrix M. If M is an n by n matrix, at least one row of M must be a linear combination of the other n-1 rows for there to exist an orthogonal solution vector V. In a noise-free system, this could be determined. But, in an actual pole-zero analysis all of the elements of matrix M are contaminated by noise on the measured data to some degree. The effect of the noise contamination is that none of the rows of M is exactly a linear combination of the others so that in the purely theoretical sense no solution vector exists.

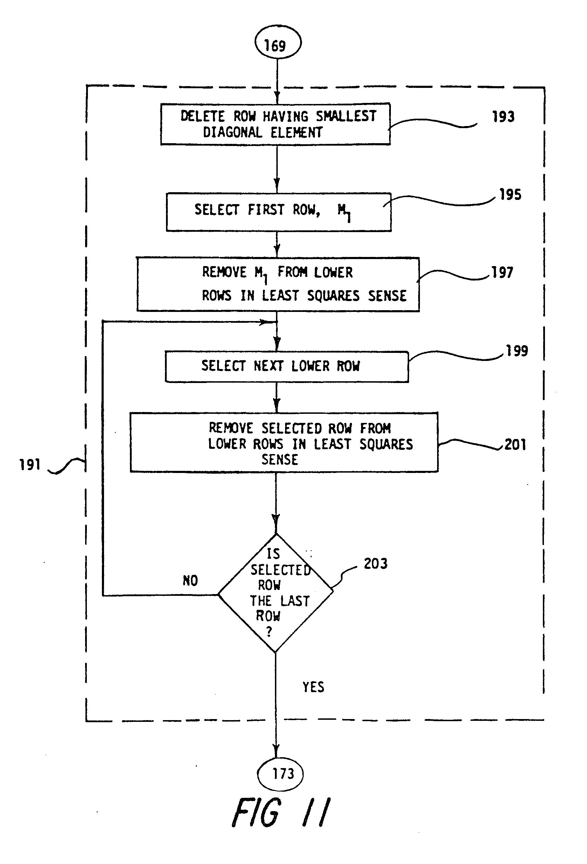

In step 171 of Figure 8, the rows of matrix M are orthogonalized relative to each other. Figure 11 shows the various steps comprising step 171 in detail. In step 193, the row of M which has the smallest magnitude diagonal element is selected and deleted from matrix M. The resulting matrix M is now an n-1 by n matrix. One row is deleted so that it is possible to have an n-length vector V which is orthogonal to the n-1 rows of M. It is desirable to delete that row which is most contaminated by noise so that the deletion has only a minimal effect on the accuracy of the performance of the analyzer 1. Since the basis polynomials being used are Chebyshev polynomials, the diagonal element of each row may be viewed as an estimate of the power of the particular Chebyshev term represented by that row wherein each row comprises a Chebyshev polynomial having an order equal to the row number. By deleting the row having the smallest diagonal value, the row having the least power and, therefore, the largest relative amount of noise contamination, is deleted.

The steps 195-203 of step 191 comprise the orthogonalization of the remaining n-1 rows of matrix M relative to each other using the Gram-Schmidt technique. A detailed description of the Gram-Schmidt orthogonalization technique may be found, e.g., at page 256 of the above referenced Ralston and Rabinowitz textbook. As described therein, the elements of each row are removed successively from each succeeding row in a least squares sense. The result of the orthogonalization technique is that the n-1 rows are orthogonal to each other. Thus, if column vector V of length n is viewed as the n-th row of the n by n matrix made up of vector V and the n-1 rows of M, then a vector V which is orthogonal to the n-1 rows of M does exist. Therefore, the solution does exist.

In step 173 of Figure 8, a random number generator is used to generate random elements of vector V. In step 175, the GramSchmidt orthogonalization technique described hereinabove is used to remove each of the n-1 orthogonalized rows of M from vector V. When step 175 is completed, all of the n rows (n-1 rows of M plus the vector V) are mutually orthogonal. There is a very slight possibility that the randomly generated initial vector V could be a linear combination of one or more of the n-1 orthogonalized rows of matrix M. In step 177, the orthogonalized vector V is tested for validity. If V were, in fact, generated as a linear combination of one of the n-1 rows of M, then the orthogonalized vector V would be very small. If this is the case, then V is determined invalid and another random vector is generated. An empirically successful criterion for determining validity is to evaluate the magnitude of the orthogonalized V vector and compare it to the roundoff noise level of the processor 45. If the magnitude of V approaches the roundoff noise level, then it is determined to be invalid. For greater accuracy, for a 16 digit processor 45, vector V is determined invalid if its squared magnitude is found to be less than $10^{-12}$.

ORDER SELECTION

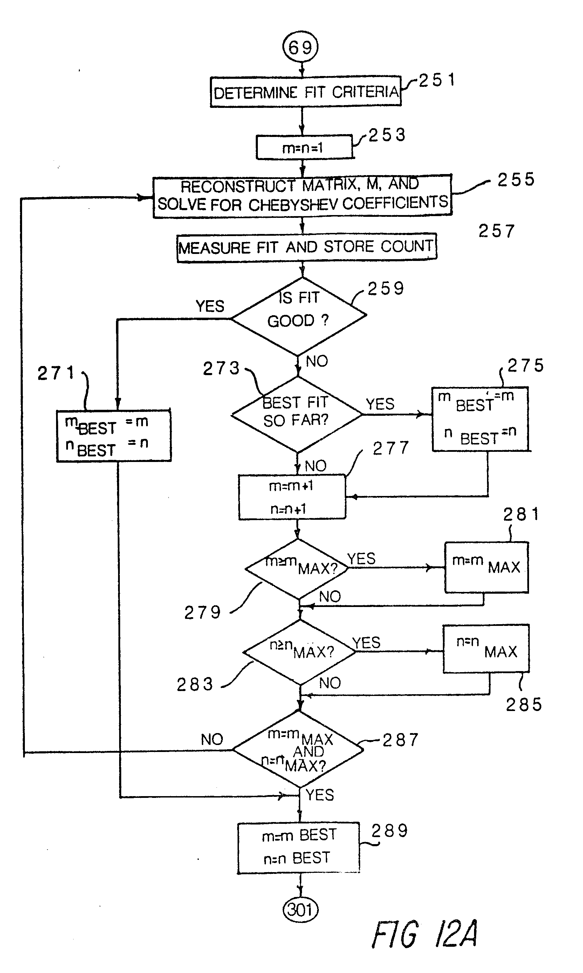

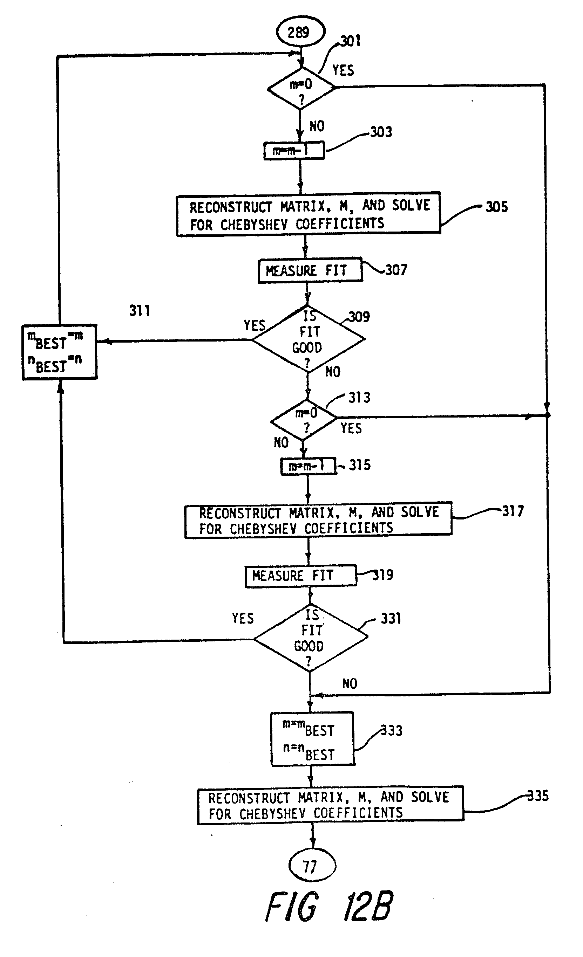

Figures 12A-B show the various steps of the automatic order selection which is performed by analyzer 1 and which is shown at step 231 of Figure 3. Step 231 shows a gross overview of the function of the automatic order selection which is shown in much greater detail in Figures 12A-B. The goal of order selection is to increment the pole and zero orders (n and m) until a fit of $H_E(f)$ to $H_{MD}(f)$ meeting certain fit criteria is achieved. Then m is decremented until two consecutive bad fits are discovered. The resulting m and n are the desired orders. If no fit meeting the criteria is ever obtained, the best fit condition is stored and presented.

In step 251, the fit criteria for determination of a good fit are determined. There are a number of criteria which may be used depending upon the particular analysis being performed. One is to test the quality of fit point by point through the frequency range and determine that a good fit is achieved if the total number of points which lie outside of an error limit is less than an acceptance number of points.

The first step in computing the error limit is to calculate the normalized variance at each frequency point from the variance measured above. The point by point normalized variance is defined as the variance at each point divided by the magnitude of $H_{MD}(f_j)$ at each point. $T_j$ is then defined as the greater of .01 or the normalized variance at each point. The point by point error limit, $EL_j$, is:

$$EL_j = \pm 10 \cdot T_j \cdot |H_{MD}(f_j)|^2 \qquad (55)$$

wherein the magnitude squared term is used to un-normalize the normalized variance or .01, whichever is used. The error limit is a window deviating in both directions from $H_{MD}(f)$.

Since the error limit is based on the variance, smoothing may be desired to eliminate random fluctuations. Thirteen point smoothing (average of each point with the six points on either side) may be used. In order to preserve peaks in the original error limit, the greater of the original error limit or the smoothed error limit may be selected point by point for use as the final error limit.

The acceptance number, AN, is the maximum number of points within the frequency range which may be outside of the error limit while still having a good fit. This number may be determined empirically or

$$AN = \frac{F_{TOT}}{25} + 4 \qquad (56)$$

may be used. $F_{TOT}$ is the total number of frequency points in the frequency range. It should be noted that if error limit smoothing is used, then the highest and lowest six points in the frequency range are ignored in the fit determinations discussed below.

In step 253, an initial order estimate of $m = n = 1$ is made. It should be noted that the user has the option of specifying an initial order estimate other than 1. The user also has the option of specifying m and n so that the steps of Figures 12A-B are not performed at all. The user can also specify $m_{MAX}$ or $n_{MAX}$ which limit the maximum permissible values of m and n in the steps of Figures 12A-B.

In step 255, the matrix M is reconstructed using the initially estimated orders of m and n. Reconstruction may be made directly if the full matrix parameters were stored. If data compression was used, then reconstruction from the retained maximum 320 parameters may be had with reference to equations 53 and 54 discussed above. Once the matrix is reconstructed, the coefficients of the D and C vectors shown in Figures 9 and 10 are solved for as discussed above. In step 257, the estimated transfer function, $H_E(f)$ is constructed from the Chebyshev coefficients as discussed above. The point by point difference between $H_{MD}(f)$ and $H_E(f)$ is measured and compared to the point by point error limit to obtain a count, which is stored, of the number of out of limit points. In step 259, this count is compared to AN to determine if the fit is good.

If the fit is determined to be good, then the current values of m and n are stored as $m_{BEST}$ and $n_{BEST}$ and step 289 is next executed. If the fit is not good, then a determination is made in step 273 of whether or not this is the best fit so far. This determination is made by comparing the count of out of error limit points with prior counts. Prior counts would have been taken if an iteration had been taken from step 287. If a determination is made that this is the best fit so far, then m and n are stored as $m_{BEST}$ and $n_{BEST}$ and m and n are incremented. If this is not the best fit so far, then no storage is made and m and n are incremented.

In steps 279-285, m and n are held to maximum limits which may have been imposed by the user or by the maximum limit of 20 by the analyzer 1. If both m and n are at the maximum limits, then the values of m and n are stored at step 289. If not, step 255 is re-executed and another fit using the incremented m and n is evaluated. Thus, m and n are incremented until either a good fit is achieved or until the maximum limits of both m and n are reached.

In steps 301-303, if the number of zeroes, m, is greater than 0, then m is decremented since both servo and modal systems typically have at least one more pole than zero. Thus, a more accurate fit may be achieved by reducing the number of zeroes and reevaluating the resulting fit. The best fit is deemed achieved at the number of zeroes for which the next two lower numbers of zeroes both have inadequate fits. If, in step 303, it was found that m was equal to zero, then step 333 would be executed next. If not, in steps 305-307, the matrix M is reconstructed for the current values of m and n, the Chebyshev coefficients are solved for and the fit of $H_E(f)$ to $H_{MD}(f)$ is evaluated at each point.

In step 309, the fit is evaluated against the fit criteria. If the fit is good, then m and n are stored and m is again decremented at step 301. If the fit is not good, and if $m = 0$, step 333 is executed. If m is not 0, then m is again decremented in step 315. In steps 317 and 319, a new solution is made and a new fit is evaluated. If the fit is now good, m and n are stored and m is decremented at step 301. If, on the other hand, the fit is again bad, m is reset at step 333 to $m_{BEST}$ which was stored previously. In this case, m is now the value at which the next two decrementations of m resulted in bad fits; n is still the value at which a good fit was obtained before m was first decremented.

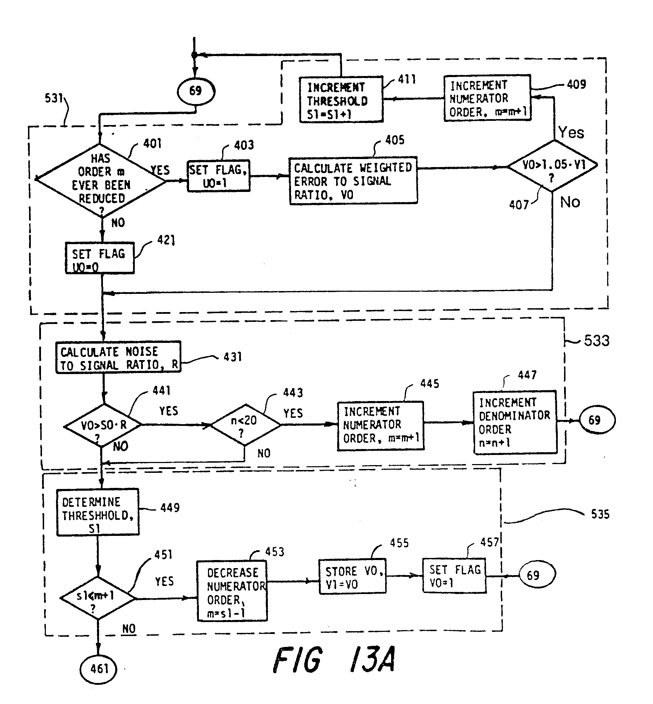

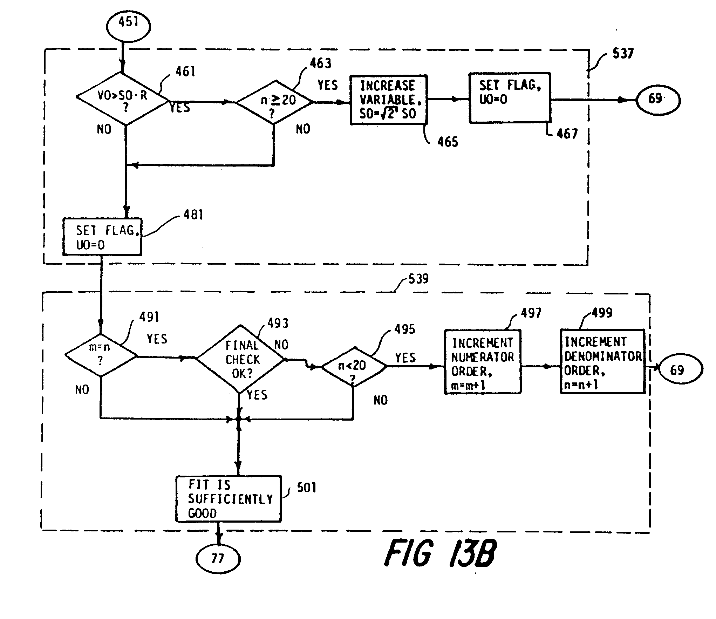

Figures 13A-B show the various steps of an alternative automatic order selection which may be used at step 231 of Figure 3 in lieu of the steps shown in Figures 12A-B. In overview, the steps of Figures 13A-B may be divided into a number of serial decision blocks which determine whether or not to vary the polynomial orders and to determine new polynomial coefficients. In block 531, the numerator order, m, is incremented and new coefficients are determined if a previous reduction in the order of m caused a degradation of the error to signal ratio. In block 533, both orders m and n are incremented and new coefficients are determined if the error to signal ratio exceeds the noise to signal ratio by a predetermined amount indicating that the error is not caused solely by the noise on the measured data. In block 535, m is reduced, and new coefficients are determined, if it is determined that the higher order coefficients have less than a certain minimal effect on the measured data. In block 537, new data is taken and the entire pole-zero analysis is performed again if an inadequate fit is obtained despite attaining the maximum allowed order n. Finally, in block 539, the fit may be determined to be sufficiently good. If the fit is determined conditionally good in blocks 531-537 and the orders m and n are equal, then the fit is considered sufficiently good. Alternatively, if the error is determined not to be excessively biased then the fit is also considered to be sufficiently good. Otherwise, both m and n are incremented and new coefficients are determined.

In step 401 of block 531, a determination is made of whether or not the order m of numerator P(s) has ever been reduced during the current performance of step 231 of Figure 3. A flag U0 is set dependent upon the outcome of the determination. If m had previously been reduced, a weighted error to signal ratio, V0, is calculated in step 405 and is evaluated in step 407. V0 is defined as :

$$V0 = \sqrt{\frac{\Sigma_{f_j} \, W(f_j) \, [H_E(i2\pi f_j) - H_{MD}(f_j)]^2}{\Sigma_{f_j} \, W(f_j) \, [H_{MD}(f_j)]^2}} \, . \tag{57}$$

If V0 is 5% or more greater than the V0 (stored as V1) from the prior fit evaluation with the higher m, then both m and the threshhold (S1, discussed below) are incremented and step 69 is repeated. The determination made in step 407 indicates that the quality of fit (measured by the error to signal ratio) degraded when m was reduced so m is incremented back to its previous value and step 69 is repeated.

In step 431 of block 533, assuming that the error to signal ratio did not increase by 5% or if no reduction of m had previously been made, the noise to signal ratio, R, is calculated. R is defined as:

$$R = \sqrt{\frac{\Sigma_{f_j} \, W(f_j) \left[ \sigma(f_j) \right]^2}{\Sigma_{f_j} \, W(f_j) \left[ H_{MD}(f_j) \right]^2}} \tag{58}$$

using the definition of variance as the noise power from equation 8 above and using the denominator from equation 57 above. In step 441, the noise to signal ratio is compared to a multiple of the error to signal ratio. The multiple, S0, is used to correlate the quality of fit to the noise on the measured data. S0 has been empirically chosen to be 2, although S0 may be increased in step 465 to allow a looser fit because of higher noise on the measured data.

If the error to signal ratio (V0) exceeds the noise to signal ratio, R, by more than a factor of S0, then the fit is considered to be poor. If the denominator order is less than the maximum allowed, then both m and n are incremented by 1 and step 69 is repeated. This increases the orders of both P(s) and Q(s) to allow a tighter fit of the estimated transfer function to the measured transfer function data. The quality of fit should increase until m or n exceeds the true order of the measured transfer function data. In analyzer 1, the maximum permissible order of each of m and n is 20 (a total of 40 each for positive and negative frequencies combined). If, in step 443, the maximum denominator order of 20 is reached, then block 535 is entered. Also, if the quality of fit was conditionally determined to be good in step 441, then block 535 is entered.

In step 449 of block 535, a threshhold level S1 is determined. S1 is defined such that:

$$T_{S1-1} \leq 1.5 \cdot T0 \tag{59}$$

and $T_{S1-1}$ is the highest magnitude $T_M$ satisfying the inequality of equation 59. $T_M$ is defined as:

$$T_M = \sum_{k=0}^{m} \left| c_k \right|^2 \tag{60}$$

wherein $c_k$ are the coefficients of the numerator Chebyshev polynomial, P(s). T0 is defined as:

$$TO = \sqrt{\frac{\Sigma_{f_j} L(f_j) \left[ \sigma(f_j) \right]^2}{\Sigma_{f_j} L(f_j) \left[ H_{MD}(f_j) \right]^2}} \qquad (61)$$

wherein the new weighting function L(s) is defined as:

$$L(f_j) = W(f_j) \cdot \left| Q(i2\pi f_j) \right|^2 \cdot \left| H_{MD}(f_j) \right|^4 \qquad (62)$$

In L(s), the W(s) term allows for emphasis of peaks, the Q(s) term removes the effect of the denominator and the $H_{MD}(f_j)$ term minimizes the effects of areas of small magnitude measured data.

In steps 451 and 453, the numerator order m is decreased to the threshhold order, S1-1. It should be noted that the denominator order, n, is never reduced in the flow chart of Figures 13A-B. The numerator order is reduced to the threshhold in order to ensure that no virtual zeroes are injected by maintaining the numerator at too high a level. S1 is determined so that only relatively ineffective coefficients of P(s) are eliminated so that the order of P(s) is not reduced too far. The factor of 1.5 in equation 59 may be varied to ensure that an optimum number of zeroes are fit.

In step 461 of block 537, the comparison of the noise to signal ratio and the error to signal ratio of step 441 is repeated. If the error to signal ratio exceeds the predetermined multiple of the noise to signal ratio and the maximum allowed order n has been met or exceeded, then a determination is made that the measured data is contaminated. If so, the entire pole-zero analysis is performed again with an increased allowed multiple of the noise to signal ratio, S0, to account for the contaminated data.

If the maximum allowed denominator order is not met or exceeded, then step 491 of block 539 is performed. If the numerator and denominator orders are not equal then the fit is determined to be sufficiently good, the steps of Figures 13A-B are completed and step 77 of Figure 3 is performed. If the numerator and denominator orders are equal, then a final check on the quality of the fit is performed. If the check is successful, or if unsuccessful and the denominator order is equal to or greater than the allowed maximum order, then the fit is determined to be sufficiently good. If the check is unsuccessful and the denominator order is less than the maximum allowed, then both the numerator and denominator orders are incremented and new coefficients are determined at step 69.

An optional final check, at step 493 of block 539, is an analysis of the polarity of the error between $H_E$-(s) and $H_{MD}(f_j)$ at each frequency point of $H_{MD}(f_j)$. The error should be centered about zero and should change polarity frequently if the quality fo the fit is sufficiently good. The final check is performed separately on the real and on the imaginary parts of $H_E(s)$ and $H_{MD}(f_j)$. The criterion for a successful check is that no more than A1 contiguous error points are of the same polarity, provided that no error point having a magnitude of less than the magnitude of the computational noise of the processor 45 are considered. A1 is selected so that a predetermined number, e.g., 5%, of sufficiently good fits are rejected at step 493 to ensure consistently good qualities of fit. A1 is statistically related to the number of frequency data points used, which is 800 for the analyzer 1. A1 may also be determined empirically.

POLYNOMIAL CONVERSION

In step 335, the Chebyshev coefficients are solved for after the matrix M has been reconstructed for the already determined best fit orders of m and n. Conversion to ordinary polynomials as shown in step 77 of Figure 3 may now be accomplished.

In step 77 of Figure 3, the P(s) and Q(s) Chebyshev polynomials of $H_E(s)$ are converted to ordinary polynomials. This conversion may easily be performed by persons of ordinary skill in the art utilizing the Chebyshev recurrence relationship discussed hereinabove with respect to equation 10. The result of the conversion is that P(s) and Q(s) are ordinary polynomials in the complex variable s.

ROOT SOLUTION

In step 79, a root solver is used to find the roots of P(s) and Q(s) which, by definition, are the zeroes and poles of $H_E(s)$. Any of a number of well known root solvers may be used to make this determination. In particular, the root solver used in the Hewlett-Packard Co. model HP-9825 desktop computer, and described at pages 213-224 of the Hewlett-Packard Co. "General Utility Routines" which may be obtained as Hewlett-Packard Co. part number 09825-10001, is effective and useful. An additional discussion of root finders is contained in "A Convergent Algorithm For Solving Polynomial Equations" by J.B. Moore, at pages 311-315 of the Journal of the Association For Computing Machinery, Vol. 14, No. 2, April, 1967.

Finally, in step 81 of Figure 3, the poles and zeroes of the estimated transfer function $H_E(s)$ are displayed on display 7 of analyzer 1. Any of a number of conventional display procedures may be used effectively and the poles and zeroes may be displayed, e.g., in rectangular or polar form.

**Claims**

1. An apparatus for determining poles and zeroes of the transfer function of a device, comprising
   1) stimulating means for stimulating the device with a stimulus signal and thereby exciting a response signal;
   2) sampling means for periodically acquiring digital samples of the stimulus signal and the response signal;
   3) a computer programmed to compute from the samples the auto-power spectra and the cross-power spectrum of the stimulus signal and the response signal at each of a plurality of frequencies of interest; and
   4) controlling means operative to control the stimulating means, the sampling means and the computer for repeating the acquisition of samples and the calculation of spectra at least once to acquire an ensemble of spectra; wherein the computer is programmed to
   5) compute ensemble averages of the spectra at each frequency; and
   6) compute measured values of the transfer function from the ensemble averages of the spectra at each frequency;
   **characterized** in that
   7) the controlling means (5) is actuable by a user to start a determination of poles ($p_k$) and zeroes ($z_k$) of the transfer function; and
   8) the computer (41, 43, 45, 47, 49) is programmed to be responsive to the controlling means (5) for performing the determination of poles ($p_k$) and zeroes ($z_k$) by:
   9) determining (113, equ. (8)) the variance of the measured transfer function ($H_{MD}$) from the ensemble averages of the spectra ($G_{XX}$, $G_{YY}$, $G_{YX}$) at each frequency ($f_j$);
   10) least squares fitting (67-71) an estimated transfer function ($H_E$) to the measured transfer function ($H_{MD}$) at each frequency ($f_j$), the estimated transfer function ($H_E$) comprising a fraction of polynomial functions (P, Q);
   11) in the step 10) of least squares fitting, at each frequency ($f_j$) subtracting (167, equ. (46)) from the squared error between the estimated transfer function ($H_E$) and the measured transfer function ($H_{MD}$) a bias value determined from the variance of the measured transfer function ($H_{MD}$);
   12) determining (77, 79) the poles ($p_k$) and zeroes ($z_k$) of the estimated transfer function ($H_E$); and
   13) producing (81) an output indicative of the poles ($p_k$) and zeroes ($z_k$).

2. An apparatus as in claim 1, characterized in that the computer (41, 43, 45, 47, 49) is programmed to perform step 10) of least squares fitting by:
   14) determining (equ. (10)) the error between the measured transfer function ($H_{MD}$) and the fraction of polynomial functions (P, Q) at each frequency ($f_j$);
   15) squaring the error at each frequency ($f_j$);
   16) performing step 11) above to correct the squared errors; and
   17) computing (69) coefficients ($c_0$-$c_m$, $d_0$-$d_n$) of the polynomial functions (P, Q) that minimize the sum of corrected squared errors.

3. An apparatus as in claim 2, characterized in that the computer (41, 43, 45, 47, 49) is programmed to perform step 17) above by:
   18) generating (163, 165) at least one vector (C, D) having coefficients of the polynomial functions (P, Q) as elements;
   19) generating (163, 165) at least one matrix (F, G, H) of partial derivatives of the sum of squared errors with respect to coefficients ($c_0$-$c_m$, $d_0$-$d_n$) of the polynomial functions (P, Q); and
   20) solving a set of homogeneous coupled equations (Fig. 10, equ. 51-52), resulting from an equation of the vector (C, D) multiplied by the matrix (F, G, H) to zero, for the coefficients ($c_0$-$c_m$, $d_0$-$d_n$) of the polynomial functions (P, Q).

4. An apparatus as in claim 3, characterized in that the computer (41, 43, 45, 47, 49) is programmed to perform step 20) above by:
   21) orthogonalizing (171-177) the matrix rows; and
   22) performing the multiplication.

5. An apparatus as in claim 4, characterized in that the computer (41, 43, 45, 47, 49) is programmed to perform step 21) above by:
   23) deleting (193) a minimum row which has a diagonal element which is smaller than the diagonal elements of all other rows;
   24) subtracting (195) an uppermost row from all rows lower than the uppermost row; and
   25) subtracting (199-203) each lower row from all rows lower than itself.

6. An apparatus as in claim 5, characterized in that the computer (41, 43, 45, 47, 49) is programmed to perform step 24) above repeatedly in serial fashion by row from higher rows to lower rows.

7. An apparatus as in any preceding claim, characterized in that the computer (41, 43, 45, 47, 49) is programmed to perform an error weighting in steps 10) and 11) above by:
   26) generating (67) the estimated transfer function ($H_E$);
   27) generating (65) a weighting function (W) to emphasize certain desired regions of the estimated transfer function ($H_E$);
   28) at each frequency ($f_j$) determining an error between the measured transfer function ($H_{MD}$) and the estimated transfer function ($H_E$);
   29) at each frequency ($f_j$) multiplying the error by the weighting function (W); and
   30) operating on the weighted errors ($E_j$) in all further computation involving the error between the measured transfer function ($H_{MD}$) and the estimated transfer function ($H_E$).

8. An apparatus as in claim 7, characterized in that the computer (41, 43, 45, 47, 49) is programmed to perform step 27) above by:
   31) differentiating (121) with respect to frequency the phase of the measured transfer function ($H_{MD}$) at each frequency ($f_j$);
   32) converting (125) the differentiated phase to absolute magnitude at each frequency ($f_j$);
   33) deemphasizing (131) any frequency at which the variance of the measured transfer function ($H_{MD}$) is high; and
   34) normalizing (133) to one the result of step 33).

9. An apparatus as in claim 8, characterized in that the computer (41, 43, 45, 47, 49) is programmed to perform, after step 31) above, a step of smoothing (123) the phase derivative, and after step 32) above, a step of smoothing (129) the absolute magnitude.

10. An apparatus as in claim 9, characterized in that the computer (41, 43, 45, 47, 49) is programmed to perform, before the step of smoothing the absolute magnitude, a step of forming (127) the square root of the absolute magnitude at each frequency ($f_j$).

11. An apparatus as in claim 7, characterized in that the computer (41, 43, 45, 47, 49) is programmed to perform step 27) above by:
   35) detecting (145) peaks in the measured transfer function ($H_{MD}$);
   36) forming (147) a surface at each of the detected peaks, and
   37) summing (155) the surfaces across the frequencies ($f_j$).

12. An apparatus as in claim 11, characterized in that the computer (41, 43, 45, 47, 49) is programmed to perform a step of:
   38) normalizing (151) the summation of surfaces to a maximum surface value.

13. An apparatus as in claim 11 or 12, characterized in that the surfaces each comprise a parabola.

**14.** An apparatus as in claim 13, characterized in that the computer (41, 43, 45, 47, 49) is programmed to further perform the steps of:

39) determining (141) a mean squared value of the measured transfer function ($H_{MD}$) at each frequency ($f_j$);

40) computing (153) an absolute magnitude squared of the measured transfer function ($H_{MD}$) at each frequency ($f_j$);

41) dividing (153) the absolute magnitude squared by the mean squared value at each frequency ($f_j$); and

42) combining (155) the divided absolute magnitude squared with the normalized summation of parabolas at each frequency ($f_j$).

**15.** An apparatus as in any preceding claim, characterized in that the computer (41, 43, 45, 47, 49) is programmed to perform steps 10), 11) and 12) above by:

43) selecting (67) an initial number (n) of poles and an initial number (m) of zeroes for the estimated transfer function ($H_E$);

44) determining (69) the estimated transfer function ($H_E$) therewith;

45) comparing (71) the measured ($H_{MD}$) and estimated ($H_E$) transfer functions and determining (71) a quality of fit therefrom;

46) incrementing (75) the numbers (n, m) of poles and zeroes of the estimated transfer function ($H_E$) until a best fit is obtained;

47) decrementing (75) the number (m) of zeroes until an optimal fit is obtained; and

48) calculating (79) the poles ($p_k$) and zeroes ($z_k$) as roots of the estimated transfer function ($H_E$).

**16.** An apparatus as in claim 15, characterized in that the computer (41, 43, 45, 47, 49) is programmed to perform step 45) above by:

49) determining an error limit at each frequency ($f_j$);

50) subtracting the measured transfer function ($H_{MD}$) from the estimated transfer function ($H_E$) at each frequency ($f_j$);

51) comparing the result to the error limit at each frequency ($f_j$);

52) counting a number of results which exceed the error limit.

**17.** An apparatus as in claim 16, characterized in that the computer (41, 43, 45, 47, 49) is programmed to further perform, in step 45 above, the steps of:

53) recording the number of results exceeding the error limit; and

54) determining that a best fit is obtained if the number is less than a predetermined acceptance number.

**18.** An aparatus as in one of claims 15 through 17, characterized in that the computer (41, 43, 45, 47, 49) is programmed in step 47) above to recognize an optimal fit if a subsequent two decrementations of the number of zeroes (m) result in fits that are not good.

**19.** An apparatus as in one of claims 15 through 18, characterized in that the initial number (n) of poles and the initial number (m) of zeroes is one.

**20.** An apparatus as in one of claims 1 through 14, characterized in that the computer (41, 43, 45, 47, 49) is programmed to perform steps 10), 11) and 12) above by:

55) selecting (253) an initial number (n) of poles and an initial number (m) of zeroes of an estimated transfer function ($H_E$);

56) determining an estimated transfer function ($H_E$) having the initial numbers (n, m) of poles and zeroes;

57) measuring (431) an error to signal ratio of the estimated ($H_E$) and measured ($H_{MD}$) transfer functions;

58) incrementing (445, 447) the numbers (n, m) of poles and zeroes of the estimated transfer function ($H_E$) if the error to signal ratio is greater than a noise to signal ratio of the measured transfer function ($H_{MD}$);

59) determining the estimated transfer function ($H_E$) with the incremented numbers (n, m) of poles and zeroes; and

60) calculating (79) the poles ($p_k$) and zeroes ($z_k$) as roots of the estimated transfer function ($H_E$).

EP 0 172 499 B1

**21.** An apparatus as in claim 20, characterized in that the computer (41, 43, 45, 47, 49) is programmed to perform, after step 59) above, the steps of:

61) determining an effect of higher order coefficients of the estimated transfer function (HE);

62) decrementing (453) the number (m) of zeroes of the estimated transfer function ($H_E$) if the effect is below a predetermined level; and

63) redetermining the estimated transfer function ($H_E$) with the decremented number (m) of zeroes.

**22.** An apparatus as in any preceding claim, characterized in that the computer (41, 43, 45, 47, 49) is programmed to perform, in step 10) above, a step of:

64) generating (67) the estimated transfer function ($H_E$) as a rational fraction of Chebyshev polynomials (T); and before step 12) above, a step of

65) converting (77) the Chebyshev polynomials (T) of the estimated transfer function ($H_E$) to ordinary polynomials (P, Q).

**23.** An apparatus as in any preceding claim, characterized in that the computer (41, 43, 45, 47, 49) is programmed to Fourier transform (95) the sampled stimulus signal (x) and response signal (y) to the frequency domain.

**Patentansprüche**

**1.** Vorrichtung zum Bestimmen von Polen und Nullstellen der Übertragungsfunktion eines Gerätes, umfassend

1) eine Stimulierungseinrichtung zum Stimulieren des Gerätes mit einem Stimulierungssignal und zum Anregen eines Antwortsignals hierdurch;

2) eine Abtasteinrichtung zum periodischen Erfassen von digitalen Abtastwerten des Stimulierungssignals und des Antwortsignals;

3) einen Computer, der programmiert ist, um aus den Abtastwerten das Selbstleistungsspektrum und das Kreuz-Leistungsspektrum des Stimulierungssignals und des Antwortsignals bei jeder von einer Vielzahl von interessierenden Frequenzen zu berechnen; und

4) eine Steuerungseinrichtung, die betreibbar ist, um die Stimulierungseinrichtung, die Abtasteinrichtung und den Computer zu steuern, um das Erfassen von Abtastwerten und die Berechnung von Spektren wenigstens einmal zu wiederholen, um eine Gesamtheit von Spektren zu erfassen; wobei der Computer programmiert ist, um

5) Gesamtheitsmittelwerte der Spektren bei jeder Frequenz zu berechnen; und

6) gemessene Werte der Übertragungsfunktion aus den Gesamtheitsmittelwerten der Spektren bei jeder Frequenz zu berechnen;

dadurch gekennzeichnet, daß

7) die Steuerungseinrichtung (5) von einem Benutzer betätigbar ist, um eine Bestimmung von Polen ($p_k$) und Nullstellen ($z_k$) der Übertragungsfunktion zu starten; und

8) der Computer (41, 43, 45, 47, 49) programmiert ist, um auf die Steuerungseinrichtung (5) zur Durchführung der Bestimmung von Polen ($p_k$) und Nullstellen ($z_k$) durch folgende Schritte anzusprechen:

9) Bestimmen (113, Gl. (8)) der Varianz der gemessenen Übertragungsfunktion ($H_{MD}$) aus den Gesamtheitsmittelwerten der Spektren ($G_{XX}$, $G_{YY}$, $G_{YX}$) bei jeder Frequenz ($f_j$);

10) Anpassen (67-71) einer geschätzten Übertragungsfunktion ($H_E$) nach der Methode der kleinsten Quadrate an die gemessene Übertragungsfunktion ($H_{MD}$) bei jeder Frequenz ($f_j$), wobei die geschätzte Übertragungsfunktion ($H_E$) einen Bruch von Polynomfunktionen (P, Q) umfaßt;

11) bei dem Schritt 10) der Anpassung nach der Methode der kleinsten Quadrate, Subtrahieren (167, Gl. (46)) eines Versetzungswertes bei jeder Frequenz ($f_j$), der aus der Varianz der gemessenen Übertragungsfunktion ($H_{MD}$) bestimmt wird, von dem quadratischen Fehler zwischen der geschätzten Übertragungsfunktion ($H_E$) und der gemessenen Übertragungsfunktion ($H_{MD}$);

12) Bestimmen (77, 79) der Pole ($p_k$) und Nullstellen ($z_k$) der geschätzten Übertragungsfunktion ($H_E$); und

13) Erzeugen (81) einer die Pole ($p_k$) und Nullstellen ($z_k$) anzeigenden Ausgangsgröße.

**2.** Vorrichtung nach Anspruch 1, dadurch gekennzeichnet,

daß der Computer (41, 43, 45, 47, 49) programmiert ist, um den Schritt 10) der Anpassung nach der

21

Methode der kleinsten Quadrate durch folgende Schritte durchzuführen:

14) Bestimmen (Gl. (10)) des Fehlers zwischen der gemessenen Übertragungsfunktion ($H_{MD}$) und dem Bruch von Polynomfunktionen (P, Q) bei jeder Frequenz ($f_j$);

15) Quadrieren des Fehlers bei jeder Frequenz ($f_j$);

16) Durchführen des obigen Schrittes 11), um die quadrierten Fehler zu korrigieren; und

17) Berechnen (69) von Koeffizienten ($c_0$-$c_m$, $d_0$-$d_n$) der Polynomfunktionen (P, Q), die die Summe der korrigierten, quadrierten Fehler minimieren.

3. Vorrichtung nach Anspruch 2, dadurch gekennzeichnet,

daß der Computer (41, 43, 45, 47, 49) programmiert ist, um den obigen Schritt 17) durch folgende Schritte durchzuführen:

18) Erzeugen (163, 165) wenigstens eines Vektors (C, D), der Koeffizienten der Polynomfunktionen (P, Q) als Elemente besitzt;

19) Erzeugen (163, 165) wenigstens einer Matrix (F, G, H) partieller Ableitungen der Summe der quadrierten Fehler nach Koeffizienten ($c_0$-$c_m$, $d_0$-$d_n$) der Polynomfunktionen (P, Q); und

20) Lösen eines Satzes homogener gekoppelter Gleichungen (Fig. 10, Gl. 51-52) für die Koeffizienten ($c_0$-$c_m$, $d_0$-$d_n$) der Polynomfunktionen (P, Q), der sich aus einer Gleichung für den Vektor (C, D) multiziplert mit der Matrix (F, G, H) zu Null ergibt.

4. Vorrichtung nach Anspruch 3, dadurch gekennzeichnet,

daß der Computer (41, 43, 45, 47, 49) programmiert ist, um den obigen Schritt 20) durch folgende Schritte durchzuführen:

21) Orthogonalisieren (171-177) der Matrixzeilen; und

22) Durchführen der Multiplikation.

5. Vorrichtung nach Anspruch 4, dadurch gekennzeichnet,

daß der Computer (41, 43, 45, 47, 49) programmiert ist, um den obigen Schritt 21) durch folgende Schritte durchzuführen:

23) Entfernen (193) einer Minimumszeile, die ein Diagonalelement enthält, das kleiner als die Diagonalelemente aller anderen Zeilen ist;

24) Subtrahieren (195) einer obersten Zeile von allen Zeilen, die niederer als die oberste Zeile sind; und

25) Subtrahieren (199-203) jeder niedereren Zeile von allen Zeilen, die niederer als sie selbst sind.

6. Vorrichtung nach Anspruch 5, dadurch gekennzeichnet,

daß der Computer (41, 43, 45, 47, 49) programmiert ist, um den obigen Schritt 24) wiederholt in serieller Weise der Zeile nach von obereren zu niedereren Zeilen durchzuführen.

7. Vorrichtung nach einem der vorherigen Ansprüche dadurch gekennzeichnet,

daß der Computer (41, 43, 45, 47, 49) programmiert ist, um eine Fehlergewichtung bei den obigen Schritten 10) und 11) durch folgende Schritte durchzuführen:

26) Erzeugen (67) der geschätzten Übertragungsfunktion ($H_E$);

27) Erzeugen (65) einer Gewichtungsfunktion (W), um gewisse gewünschte Bereiche der geschätzten Übertragungsfunktion ($H_E$) hervorzuheben;

28) Bestimmen eines Fehlers zwischen der gemessenen Übertragunsfunktion ($H_{MD}$) und der geschätzten Übertragunsfunktion ($H_E$) bei jeder Frequenz ($f_j$);

29) Multiplikation des Fehlers mit der Gewichtungsfunktion (W) bei jeder Frequenz ($f_j$);

30) Arbeiten mit den gewichteten Fehlern ($E_j$) bei allen weiteren Berechnungen, bei denen die Fehler zwischen der gemessenen Übertragunsfunktion ($H_{MD}$) und der geschätzten Übertragunsfunktion ($H_E$) eine Rolle spielen.

8. Vorrichtung nach Anspruch 7, dadurch gekennzeichnet,

EP 0 172 499 B1

daß der Computer (41, 43, 45, 47, 49) programmiert ist, um den obigen Schritt 27) durch folgende Schritte durchzuführen:

31) Differenzieren (121) der Phase der gemessenen Übertragunsfunktion ($H_{MD}$) nach der Frequenz bei jeder Frequenz ($f_j$);

32) Umwandeln (125) der differenzierten Phase in den Absolutwert bei jeder Frequenz ($f_j$);

33) Deakzentuieren (131) jeder Frequenz, bei der die Varianz der gemessenen Übertragungsfunktion ($H_{MD}$) hoch ist; und

34) Normalisieren (133) des Ergebnisse des Schrittes 33) auf Eins.

**9.** Vorrichtung nach Anspruch 8, dadurch gekennzeichnet,

daß der Computer (41, 43, 45, 47, 49) programmiert ist, um nach dem obigen Schritt 31) einen Schritt zum Glätten (123) der Phasenableitung und nach dem obigen Schritt 32) einen Schritt zum Glätten (129) des Absolutwertes durchzuführen.

**10.** Vorrichtung nach Anspruch 9, dadurch gekennzeichnet,

daß der Computer (41, 43, 45, 47, 49) programmiert ist, um vor dem Schritt des Glättens (123) des Absolutwertes einen Schritt zum Bilden (127) der Quadratwurzel des Absolutwertes bei jeder Frequenz ($f_j$) durchzuführen.

**11.** Vorrichtung nach Anspruch 7, dadurch gekennzeichnet,

daß der Computer (41, 43, 45, 47, 49) programmiert ist, um den obigen Schritt 27) durch folgende Schritte durchzuführen:

35) Erfassen (145) von Spitzen in der gemessenen Übertragungsfunktion ($H_{MD}$);

36) Bilden (147) einer Oberfläche bei jeder der erfaßten Spitzen, und

37) Summieren (155) der Oberflächen über die Frequenzen ($f_j$).

**12.** Vorrichtung nach Anspruch 11, dadurch gekennzeichnet,

daß der Computer (41, 43, 45, 47, 49) programmiert ist, um folgenden Schritt durchzuführen:

38) Normalisieren (151) der Summierung der Oberflächen auf einen maximalen Oberflächenwert.

**13.** Vorrichtung nach Anspruch 11 oder 12, dadurch gekennzeichnet,

daß jede Oberfläche eine Parabel umfaßt.

**14.** Vorrichtung nach Anspruch 13, dadurch gekennzeichnet,

daß der Computer (41, 43, 45, 47, 49) programmiert ist, um ferner folgende Schritte durchzuführen:

39) Bestimmen (141) eines mittleren quadrierten Wertes der gemessenen Übertragungsfunktion ($H_{MD}$) bei jeder Frequenz ($f_j$);

40) Berechnen (153) eines quadrierten Absolutwertes der gemessenen Übertragungsfunktion ($H_{MD}$) bei jeder Frequenz ($f_j$);

41) Dividieren (153) des quadrierten Absolutwertes durch den mittleren quadrierten Wert bei jeder Frequenz ($f_j$); und

42) Kombinieren (155) des dividierten quadrierten Absolutwertes mit der normalisierten Summierung der Parabeln bei jeder Frequenz ($f_j$).

**15.** Vorrichtung nach einem der vorhergehenden Ansprüche, dadurch gekennzeichnet,

daß der Computer (41, 43, 45, 47, 49) programmiert ist, um die obigen Schritte 10), 11) und 12) durch folgende Schritte durchzuführen:

43) Auswählen (67) einer Anfangszahl (n) von Polen und einer Anfangszahl (m) von Nullstellen für die geschätzte Übertragungsfunktion ($H_E$);

44) hiermit Bestimmen der geschätzten Übertragungsfunktion ($H_E$);

45) Vergleichen (71) der gemessenen ($H_{MD}$) und der geschätzten Übertragungsfunktion ($H_E$) und

23

EP 0 172 499 B1

daraus Bestimmen (71) einer Anpassungsgüte;

46) Inkrementieren (75) der Anzahl (n, m) von Polen und Nullstellen der geschätzten Übertragungsfunktion ($H_E$) bis eine beste Anpassung erreicht ist;

47) Dekrementieren (75) der Anzahl (m) von Nullstellen, bis eine optimale Anpassung erreicht ist; und

48) Berechnen (79) der Pole ($p_k$) und Nullstellen ($z_k$) als Wurzeln der geschätzten Übertragungsfunktion ($H_E$).

**16.** Vorrichtung nach Anspruch 15, dadurch gekennzeichnet,

daß der Computer (41, 43, 45, 47, 49) programmiert ist, um den obigen Schritt 45) durch folgende Schritte durchzuführen:

49) Bestimmen einer Fehlergrenze bei jeder Frequenz (fj);

50) Subtrahieren der gemessenen Übertragungsfunktion ($H_{MD}$) von der geschätzten Übertragungsfunktion ($H_E$) bei jeder Frequenz ($f_j$);

51) Vergleichen des Ergebnisses mit der Fehlergrenze bei jeder Frequenz (fj);

52) Zählen einer Anzahl von Ergebnissen, die die Fehlergrenze überschreiten.

**17.** Vorrichtung nach Anspruch 16, dadurch gekennzeichnet,

daß der Computer (41, 43, 45, 47, 49) programmiert ist, um bei dem obigen Schritt 45) ferner folgende Schritte durchzuführen:

53) Aufzeichnen der Anzahl der Ergebnisse, die die Fehlergrenze überschreiten; und

54) Bestimmen, daß eine beste Anpassung erhalten wird, wenn die Anzahl kleiner als eine vorbestimmte Annahmezahl ist.

**18.** Vorrichtung nach einem der Ansprüche 15 bis 17, dadurch gekennzeichnet,

daß der Computer (41, 43, 45, 47, 49) bei dem obigen Schritt 47) programmiert ist, um eine optimale Anpassung zu erkennen, wenn eine aufeinanderfolgende Zweier-Dekrementierung der Anzahl der Nullstellen (m) Anpassungen ergibt, die schlecht sind.

**19.** Vorrichtung nach einem der Ansprüche 15 bis 18, dadurch gekennzeichnet,

daß die Anfangszahl (n) der Pole und die Anfangszahl (m) der Nullstellen Eins ist.

**20.** Vorrichtung nach einem der Ansprüche 1 bis 14, dadurch gekennzeichnet,

daß der Computer (41, 43, 45, 47, 49) programmiert ist, um die obigen Schritt 10), 11) und 12) durch folgende Schritte durchzuführen:

55) Auswählen (253) einer Anfangszahl (n) von Polen und einer Anfangszahl (m) von Nullstellen einer geschätzten Übertragungsfunktion ($H_E$);

56) Bestimmen einer geschätzten Übertragungsfunktion ($H_E$), die die Anfangszahl (n, m) von Polen und Nullstellen aufweist;

57) Messen (431) eines Fehler/Signal-Verhältnisses der geschätzten ($H_E$) und gemessenen ($H_{MD}$) Übertragungsfunktion;

58) Inkrementieren (445, 447) der Anzahl (n, m) von Polen und Nullstellen der geschätzten Übertragungsfunktion ($H_E$), wenn das Fehler/Signal-Verhältnis größer als ein Rausch/Signal-Verhältnis der gemessenen Übertragungsfunktion ($H_{MD}$) ist;

59) Bestimmen der geschätzten Übertragungsfunktion ($H_E$) mit der inkrementierten Anzahl (n, m) von Polen und Nullstellen; und

60) Berechnen (79) der Pole ($p_k$) und Nullstellen ($z_k$) als Wurzeln der geschätzten Übertragungsfunktion ($H_E$).

**21.** Vorrichtung nach Anspruch 20, dadurch gekennzeichnet,

daß der Computer (41, 43, 45, 47, 49) programmiert ist, um nach dem obigen Schritt 59) folgende Schritte durchzuführen :

24

61) Bestimmen einer Wirkung von Koeffizienten höherer Ordnung der geschätzten Übertragungsfunktion ($H_E$);

62) schrittweises Herabsetzen (453) der Anzahl (m) von Nullstellen der geschätzten Übertragungsfunktion ($H_E$), wenn die Wirkung unterhalb eines vorbestimmten Pegels liegt; und

63) erneutes Bestimmen der geschätzten Übertragungsfunktion ($H_E$) mit der schrittweise herabgesetzten Anzahl (m) von Nullstellen.

**22.** Vorrichtung nach irgendeinem der vorhergehenden Ansprüche, dadurch gekennzeichnet,

daß der Computer (41, 43, 45, 47, 49) programmiert ist, um bei dem obigen Schritt 10) einen der folgenden Schritt durchzuführen:

64) Erzeugens der geschätzten Übertragungsfunktion ($H_E$) als einen rationalen Bruch von Tschebyschewschen-Polynomen (T), und vor dem obigen Schritt 12)

65) Umwandelns der Tschebyschewschen-Polynome (T) der geschätzten Übertragungsfunktion ($H_E$) in gewöhnliche Polynome (P, Q).

**23.** Vorrichtung nach irgendeinem der vorhergehenden Ansprüche, dadurch gekennzeichnet,

daß der Computer (41, 43, 45, 47, 49) programmiert ist, um eine Fourier-Transformation des abgetasteten Stimulierungssignals (x) und des Antwortsignals (y) in den Frequenzbereich durchzuführen.

## Revendications

**1.** Un appareil destinè à déterminer les pôles et les zéros de la fonction de transfert d'un dispositif, comprenant

1) un moyen d'excitation pour l'excitation du dispositif par un signal d'excitation et, de ce fait, l'excitation d'un signal de réponse,

2) un moyen de prélèvement d'échantillons pour l'acquisition périodique d'échantillons digitaux du signal d'excitation et du signal de réponse,

3) un ordinateur programmé pour calculer, à partir des échantillons, les spectres de commande automatique et le spectre de commande diagonale du signal d'excitation et du signal de réponse à chacune d'une pluralité de fréquences d'intérêt, et

4) un moyen de commande fonctionnant pour commander le moyen d'excitation, le moyen de prélèvement d'échantillons et l'ordinateur pour répéter l'acquisition d'échantillons et le calcul de spectres, au moins une fois, pour acquérir un ensemble de spectres;

dans lequel l'ordinateur est programmé pour

5) calculer les moyennes d'ensembles des spectres à chaque fréquence, et

6) calculer des valeurs mesurées de la fonction de transfert à partir des moyennes d'ensembles des spectres à chaque fréquence,

caractérisé en ce que

7) le moyen de commande (5) peut être actionné par un utilisateur pour commencer une détermina-tion de pôles ($p_k$) et de zéros ($z_k$) de la fonction de transfert, et

8) l'ordinateur (41, 43, 45, 47, 49) est programmé pour répondre au moyen de commande (5) pour effectuer la détermination de pôles ($p_k$) et de zéros ($z_k$) en:

9) déterminant (113, équation (8)) la variance de la fonction de transfert mesurée ($H_{MD}$) à partir des moyennes d'ensembles des spectres ($G_{XX}$, $G_{YY}$, $G_{YX}$) à chaque fréquence (fj),

10) déterminant le fit par moindres carrés d'une fonction de transfert estimée ($H_E$) dans la fonction de transfert mesurée ($H_{MD}$) à chaque fréquence (fj), la fonction de transfert estimée ($H_E$) comprenant une fraction de fonctions de polynôme (P, Q),

11) soustrayant (167, équation (46)), à l'étape 10) de détermination du fit par moindres carrés, à chaque fréquence (fj), de l'erreur élevée au carré entre la fonction de transfert estimée ($H_E$) et la fonction de transfert mesurée ($H_{MD}$), une valeur de prévention déterminée à partir de la variance de la fonction de transfert mesurée ($H_{MD}$),

12) déterminant (77, 79) les pôles ($p_k$) et les zéros ($z_k$) de la fonction de transfert estimée ($H_E$), et

13) produisant (81) une sortie indiquant les pôles ($p_k$) et les zéros ($z_k$).

**2.** Un appareil suivant la revendication 1, caractérisé en ce que l'ordinateur (41, 43, 45, 47, 49) est programmé pour exécuter l'étape 10) d'établissement du fit par moindres carrés en:

14) déterminant (équation (10)) l'erreur entre la fonction de transfert mesurée ($H_{MD}$) et la fraction de fonctions de polynôme (P, Q) à chaque fréquence (fj),

15) élévant au carré l'erreur à chaque fréquence (fj),

16) exécutant l'étape 11) ci-dessus pour corriger les erreurs élevées au carré, et

17) calculant (69) les coefficients ($c_0$-$c_m$, $d_0$-$d_n$) des fonctions de polynôme (P, Q) qui minimisent la somme des erreurs élevées au carré corrigées.

3. Un appareil suivant la revendication 2, caractérisé en ce que l'ordinateur (41, 43, 45, 47, 49) est programmé pour exécuter l'étape 17) ci-dessus en:

18) engendrant (163, 165) au moins un vecteur (C, D) ayant des coefficients des fonctions de polynôme (P, Q) comme éléments,

19) engendrant (163, 165) au moins une matrice (F, G, H) de dérivées partielles de la somme des erreurs élevées au carré par rapport aux coefficients ($c_0$-$c_m$, $d_0$-$d_n$) des fonctions de polynôme (P, Q), et

20) résolvant un jeu d'équations couplées homogènes (Figure 10, équation 51-52) résultant d'une équation du vecteur (C, D) multiplié par la matrice (F, G, H) à zéro, pour les coefficients ($c_0$-$c_m$, $d_0$-$d_n$) des fonctions de polynôme (P, Q).

4. Un appareil suivant la revendication 3, caractérisé en ce que l'ordinateur (41, 43, 45, 47, 49) est programmé pour exécuter l'étape 20) ci-dessus en:

21) orthogonalisant (171-177) les rangées de la matrice, et

22) effectuant la multiplication.

5. Un appareil suivant la revendication 4, caractérisé en ce que l'ordinateur (41, 43, 45, 47, 49) est programmé pour exécuter l'étape 21) ci-dessus en:

23) supprimant (193) une rangée minimale qui présente un élément diagonal qui est plus petit que les éléments diagonaux de toutes les autrees rangées,

24) soustrayant (195) une rangée supérieure de toutes les rangées inférieures à la rangée supérieure, et

25) soustrayant (199-203) chaque rangée inférieure de toutes les rangées inférieures à elle-même.

6. Un appareil suivant la revendication 5, caractérisé en ce que l'ordinateur (41, 43, 45, 47, 49) est programmé pour exécuter l'étape 24) ci-dessus de manière répétée, en série par rangée, des rangées supérieures aux rangées inférieures.

7. Un appareil suivant l'une ou l'autre revendication précédente, caractérisé en ce que l'ordinateur (41, 43, 45, 47, 49) est programmé pour exécuter une pondération d'erreurs aux étapes 10) et 11) ci-dessus en:

26) engendrant (67) la fonction de transfert estimée ($H_E$),

27) engendrant (65) une fonction de pondération (W) pour accentuer certaines zones désirées de la fonction de transfert estimée ($H_E$),

28) déterminant, à chaque fréquence (fj,) une erreur entre la fonction de transfert mesurée ($H_{MD}$) et la fonction de transfert estimée ($H_E$),

29) multipliant, à chaque fréquence (fj,) l'erreur par la fonction de pondération (W), et

30) travaillant sur les erreurs pondérées (Ej) dans tous les autres calculs impliquant l'erreur entre la fonction de transfert mesurée ($H_{MD}$) et la fonction de transfert estimée ($H_E$).

8. Un appareil suivant la revendication 7, caractérisé en ce que l'ordinateur (41, 43, 45, 47, 49) est programmé pour exécuter l'étape 27) ci-dessus en:

31) différenciant (121) par rapport à la fréquence la phase de la fonction de transfert mesurée ($H_{MD}$) à chaque fréquence (fj),

32) convertissant (126) la phase différenciée en grandeur absolue à chaque fréquence (fj),

33) désaccentuant (131) toute fréquence à laquelle la variance de la fonction de transfert mesurée ($H_{MD}$) est élevée, et

34) normalisant (133) à un le résultat de l'étape 33).

9. Un appareil suivant la revendication 8, caractérisé en ce que l'ordinateur (41, 43, 45, 47, 49) est programmé pour exécuter, après l'étape 31) ci-dessus, une étape d'atténuation (123) de la dérivée de phase et, après l'étape 32) ci-dessus, une étape d'atténuation (129) de la grandeur absolue.

**10.** Un appareil suivant la revendication 9, caractérisé en ce que l'ordinateur (41, 43, 45, 47, 49) est programmé pour exécuter, après l'étape d'atténuation de la grandeur absolue, une étape de formation (127) de la racine carrée de la grandeur absolue à chaque fréquence (fj).

**11.** Un appareil suivant la revendication 7, caractérisé en ce que l'ordinateur (41, 43, 45, 47, 49) est programmé pour exécuter l'étape 27) ci-dessus en:
35) détectant (145) les pointes dans la fonction de transfert mesurée ($H_{MD}$),
36) formant (147) une surface à chacune des pointes détectées, et
37) additionnant (155) les surfaces par les fréquences (fj).

**12.** Un appareil suivant la revendication 11, caractérisé en ce que l'ordinateur (41, 43, 45, 47, 49) est programmé pour exécuter l'étape consistant à:
38) normaliser (151) l'addition des surfaces jusqu'à une valeur de surface maximale.

**13.** Un appareil suivant la revendication 11 ou 12, caractérisé en ce que les surfaces comprennent, chacune, une parabole.

**14.** Un appareil suivant la revendication 13, caractérisé en ce que l'ordinateur (41, 43, 45, 47, 49) est programmé pour exécuter les étapes consistant à:
39) déterminer (141) une valeur élevée au carré moyenne de la fonction de transfert mesurée ($H_{MD}$) à chaque fréquence (fj),
40) calculer (153) une grandeur absolue élevée au carré de la fonction de transfert mesurée ($H_{MD}$) à chaque fréquence (fj),
41) diviser (153) la grandeur absolue élevée au carré par la valeur élevée au carré moyenne à chaque fréquence (fj), et
42) combiner (155) la grandeur absolue élevée au carré divisée avec l'addition normalisée des paraboles à chaque fréquence (fj).

**15.** Un appareil suivant l'une ou l'autre revendication précédente, caractérisé en ce que l'ordinateur (41, 43, 45, 47, 49) est programmé pour exécuter les étapes 10), 11) et 12) ci-dessus en:
43) sélectionnant (67) un nombre initial (n) de pôles et un nombre initial (m) de zéros pour la fonction de transfert estimée ($H_E$),
44) déterminant (69) la fonction de transfert estimée ($H_E$) avec ces derniers,
45) comparant (71) les fonctions de transfert mesurée ($H_{MD}$) et estimée ($H_E$) et en déterminant (71) une qualité de fit à partir de cela,
46) incrémentant (75) les nombres (n, m) de pôles et de zéros de la fonction de transfert estimée ($H_E$) jusqu'à obtention d'un meilleur fit,
47) décrémentant (75) le nombre (m) de zéros jusqu'à obtention d'un fit optimal, et
48) calculant (79) les pôles ($p_k$) et les zéros ($z_k$) en tant que racines de la fonction de transfert estimée ($H_E$).

**16.** Un appareil suivant la revendication 15, caractérisé en ce que l'ordinateur (41, 43, 45, 47, 49) est programmé pour exécuter l'étape 45) ci-dessus en:
49) déterminant une limite d'erreur à chaque fréquence (fj).
50) soustrayant la fonction de transfert mesurée ($H_{MD}$) de la fonction de transfert estimée ($H_E$) à chaque fréquence (fj),
51) comparant le résultat avec la limite d'erreur à chaque fréquence (fj),
52) comptant le nombre de résultats qui excèdent la limite d'erreur.

**17.** Un appareil suivant la revendication 16, caractérisé en ce que l'ordinateur (41, 43, 45, 47, 49) est programmé pour exécuter par ailleurs, à l'étape 45) ci-dessus, les étapes consistant à:
53) enregistrer le nombre de résultats excédant la limite d'erreur, et
54) déterminer qu'un meilleur fit est obtenu si le nombre est inférieur à un nombre admissible prédétermine.

**18.** Un appareil suivant l'une des revendications 15 à 17, caractérisé en ce que l'ordinateur (41, 43, 45, 47, 49) est programmé pour reconnaître, à l'étape 47) ci-dessus, un fit optimal si deux décréments successifs du nombre de zéros (m) ont pour résultat des fits qui ne sont pas bons.

**EP 0 172 499 B1**

**19.** Un appareil suivant l'une des revendications 15 à 18, caractérisé en ce que le nombre initial (n) de pôles et le nombre initial (m) de zéros est un.

**20.** Un appareil suivant l'une des revendications 1 à 14, caractérisé en ce que l'ordinateur (41, 43, 45, 47, 49) est programmé pour exécuter les étapes 10), 11) et 12) ci-dessus en:

55) sélectionnant (253) un nombre initial (n) de pôles et un nombre initial (m) de zéros d'une fonction de transfert estimée ($H_E$),

56) déterminant une fonction de transfert estimée ($H_E$) ayant les nombres initiaux (n, m) de pôles et de zéros,

57) mesurant (431) un rapport erreur-signal des fonctions de transfert estimée ($H_E$) et mesurée ($H_{MD}$),

58) incrémentant (445, 447) les nombres (n, m) de pôles et de zéros de la fonction de transfert estimée ($H_E$) si le rapport erreur-signal est supérieur à un rapport bruit-signal de la fonction de transfert mesurée ($H_{MD}$),

59) déterminant la fonction de transfert estimée ($H_E$) avec les nombres incrémentés (n, m) de pôles et de zéros, et

60) calculant (79) les pôles ($p_k$) et les zéros ($z_k$) en tant que racines de la fonction de transfert estimée ($H_E$).

**21.** Un appareil suivant la revendication 20, caractérisé en ce que l'ordinateur (41, 43, 45, 47, 49) est programmé pour exécuter, après l'étape 59) ci-dessus, les étapes consistant à:

61) déterminer un effet des coefficients d'ordre supérieur de la fonction de transfert estimée ($H_E$),

62) décrémenter (453) le nombre (m) de zéros de la fonction de transfert estimée ($H_E$) si l'effet est inférieur à un niveau prédéterminé, et

63) redéterminer la fonction de transfert estimée ($H_E$) avec le nombre (m) décrémenté de zéros.

**22.** Un appareil suivant l'une ou l'autre des revendications précédentes, caractérisé en ce que l'ordinateur (41, 43, 45, 47, 49) est programmé pour exécuter, à l'étape 10) ci-dessus, une étape consistant à:

64) engendrer (67) la fonction de transfert estimée ($H_E$) comme fraction rationnelle des polynômes de Chebyshev (T), et, avant l'étape 12) ci-dessus, une étape consistant à:

65) convertir (77) les polynômes de Chebyshev (T) de la fonction de transfert estimée ($H_E$) en polynômes ordinaires (P, Q).

**23.** Un appareil suivant l'une ou l'autre des revendications précédentes, caractérisé en ce que l'ordinateur (41, 43, 45, 47, 49) est programmé pour transformer selon Fourier (95) le signal d'excitation (x) et le signal de réponse (y) prélevés en domaine de fréquence.

FIG 1

FIG 2

FIG 3

START

APPLY STIMULUS SIGNAL
x(t) TO DEVICE — 91

RECORD AND DIGITIZE
x(t) AND RESPONSE
SIGNAL y(t) — 93

TRANSFORM TO THE
FREQUENCY DOMAIN
X(f), Y(f) — 95

REMOVE TIME DELAYS — 97

FORM CROSS - AND
AUTO - SPECTRA — 99

PERFORM ENSEMBLE
AVERAGES OF SPECTRA — 101

NO

SUFFICIENT
MEASUREMENTS
MADE
? — 103

YES

DETERMINE MEASURED
TRANSFER FUNCTION, $H_{MD}(f)$ — 105

STORE — 107

DETERMINE COHERENCE
FUNCTION — 63

111

DETERMINE VARIANCE

113

65

FIG 4

FIG 6

CALCULATE MEAN SQUARED
VALUE OF $H_{MD}(f)$ — 141

FIND PEAKS — 145

FORM $W(f)$ PARABOLAS — 147

NORMALIZE — 151

DIVIDE $|H_{MD}(f)|^2$ BY MEAN
SQUARED VALUE — 153

ADD NORMALIZED PARABOLAS
AND NORMALIZED $H_{MD}(f)$ — 155

63

67

## FIG 7

67

REMOVE PRE-SPECIFIED POLES AND ZEROES — 161

CONVERT TO MATRIX FORMULATION — 163

CREATE LEAST SQUARES FIT IN MATRIX FORM — 165

REMOVE NOISE BIAS — 167

FILL SOLUTION MATRICES — 169

ORTHOGONALIZE MATRIX — 171

GENERATE RANDOM VECTOR, V — 173

175

REMOVE FIRST ROW, $M_1$, FROM V IN LEAST SQUARES SENSE — 179

SELECT NEXT ROW — 181

REMOVE SELECTED ROW FROM V IN LEAST SQUARES SENSE — 183

IS SELECTED ROW THE LAST ROW ? — 185    NO    YES

IS VECTOR V VALID ? — 177    NO    YES

71

FIG 8

35

$$X(f) \longrightarrow \boxed{H_{MD}(f)} \longrightarrow \oplus \longrightarrow Y(f)$$

$$N_F(f)$$

## FIG 5

$$\tilde{P} = \begin{bmatrix} \tilde{P}_1 \\ \tilde{P}_2 \\ \vdots \\ \tilde{P}_m \end{bmatrix}, \quad \tilde{Q} = \begin{bmatrix} \tilde{Q}_1 \\ \tilde{Q}_2 \\ \vdots \\ \tilde{Q}_n \end{bmatrix}, \quad C = \begin{bmatrix} c_0 \\ c_1 \\ \vdots \\ c_m \end{bmatrix}, \quad D = \begin{bmatrix} d_0 \\ d_1 \\ \vdots \\ d_n \end{bmatrix},$$

$$\theta = \phi = \begin{bmatrix} | & | & \cdots & | \\ \theta_{j0} & \theta_{j1} & \cdots & \theta_{jm} \\ | & | & \cdots & | \end{bmatrix}$$

## FIG 9

$$\left[ \begin{array}{c|c} G & -H \\ \hline -H^T & F \end{array} \right] \left[ \begin{array}{c} D \\ \hline C \end{array} \right] = 0$$

## FIG 10

169

DELETE ROW HAVING SMALLEST
DIAGONAL ELEMENT — 193

SELECT FIRST ROW, $M_1$ — 195

REMOVE $M_1$ FROM LOWER
ROWS IN LEAST SQUARES SENSE — 197

SELECT NEXT LOWER ROW — 199

REMOVE SELECTED ROW FROM
LOWER ROWS IN LEAST SQUARES
SENSE — 201

191

IS
SELECTED
ROW
THE LAST
ROW
? — 203

NO

YES

173

FIG II

FIG 12A

FIG 12B

FIG 13A

FIG 13B

451

461 — VO>SO·R ? — YES / NO

463 — n≥20 ? — YES / NO

465 — INCREASE VARIABLE, SO=√2̄·SO

467 — SET FLAG, UO=0

537

69

481 — SET FLAG, UO=0

539

491 — m=n ? — YES / NO

493 — FINAL CHECK OK? — NO / YES

495 — n<20 ? — YES / NO

497 — INCREMENT NUMERATOR ORDER, m=m+1

499 — INCREMENT DENOMINATOR ORDER, n=n+1

69

501 — FIT IS SUFFICIENTLY GOOD

77

41